# EUROPÄISCHE PATENTSCHRIFT

(11) **EP 3 280 754 B1**
(45) Veröffentlichungstag und Bekanntmachung des Hinweises auf die Patenterteilung: **19.06.2024**
(21) Anmeldenummer: 16710446.2
(22) Anmeldetag: 18.03.2016
(51) Int. Cl.: C08G 18/76, C08G 18/48, C08G 18/18, C08G 18/63, C08G 18/40, C08G 18/32, C08G 18/66, C08G 101/00

(54) **HERSTELLUNG EMISSIONSARMER POLYURETHANE**
PRODUCTION OF LOW-EMISSION POLYURETHANES
FABRICATION DE POLYURÉTHANE À FAIBLE ÉMISSION

(30) Priorität: 08.04.2015 EP 15162741
(43) Veröffentlichungstag der Anmeldung: 14.02.2018
(73) Patentinhaber: Evonik Operations GmbH, 45128 Essen (DE)
(72) Erfinder: GÜNTHER, Thomas, 41464 Neuss (DE); VIDAKOVIC, Mladen, 47269 Duisburg (DE); WETTEY, Collins, 45127 Essen (DE)
(74) Vertreter: Evonik Patent Association
(86) Internationale Anmeldenummer: PCT/EP2016/055931
(87) Internationale Veröffentlichungsnummer: WO 2016/162183

(56) Entgegenhaltungen:
- EP-A1- 1 138 708
- EP-A1- 2 868 679
- US-A- 4 456 696
- US-A1- 2004 102 535
- US-B1- 6 596 663

## Beschreibung

Die vorliegende Erfindung liegt auf dem Feld der stickstoffhaltigen Verbindungen, insbesondere der Amine und der Polyurethane. Sie betrifft insbesondere die Verwendung einer stickstoffhaltige Verbindung(en) enthaltenden Mischung zur Herstellung von Polyurethanen, insbesondere von Polyurethanschaumstoffen, sowie Polyurethansysteme, die unter Verwendung solcher Mischungen erhalten wurden, sowie Zusammensetzungen, die solche Mischungen umfassen.

Die Verwendung von tertiären Aminen bei der Herstellung von Polyurethansystemen ist bekannt. Dabei wird eine Vielzahl von strukturell unterschiedlichen Aminen als Katalysatoren eingesetzt. Polyurethansysteme sind z. B. Polyurethanbeschichtungen, Polyurethanadhäsive, Polyurethandichtmittel, Polyurethanelastomere oder Polyurethanschaumstoffe, auch bezeichnet als Polyurethanschäume oder PU-Schäume.

Das Patent US 6,596,663 offenbart eine Zusammensetzung zur Herstellung emissionsarmer Polyurethan-Schaumstoffe. Die emissionsarmen Schaumstoffe weren hergestellt, indem eine Polyolkomponente enthaltend einen Aminkatalysator mit einem Polyisocyanat in Gegenwart von Wasser als Treibmittel umgesetzt wird. Beispielhaft offenbart dieses Dokument, dass der Polyolkomponente ein Katalysator zugegeben wird, der aus 50 Gew.-Teilen DMAPA und 50 Gew.-Teilen ethoxyliertem DMAPA besteht. Weiter beispielhaft beschrieben ist eine Katalysatorzusammensetzung bestehend aus 0.7 Teilen "DMAPA carbonate" und 1.14 Teilen propoxyliertem DMAPA. Die so hergestellten Weichschaumstoffe werden vorzugsweise als Polstermaterialien eingesetzt und zeichnen sich durch niedrige Emissionen aus, gezeigt durch deren Mangel an Geruch.

Die Offenlegungsschrift US 2004/102535 A1 offenbart emissionsarme Polyurethanschaumstoffe, die einen verringerten Gehalt an flüchtigen Aminen aufweisen. Die Polyurethan-Schaumstoffe werden dadurch erhalten, indem eine Polyolkomponente in Anwesenheit einer Katalysatormischung und eines Treibmittels mit einem Polyisocyanat umgesetzt werden. In Beispiel 2 wird eine Polyolkomponente verwendet, die neben einem autokalytischen Polyol und Wasser als Treibmittel auch DMAPA als Katalysator enthält. Der Anteil an DMAPA beträgt dabei weniger als 20 Gew.-%. Neben DMAPA ist mit Polycat 58 ein weiterer Katalysator auf Basis eines tertiären Amins anwesend. Die erhaltenen Schäume eignen sich u.a. als Polstermaterial oder als Isolationsmaterial.

Die Offenlegungsschrift EP 1138708 A1 offenbart einen Polyurethanschaumstoff, hergestellt unter Verwendung einer Kombination von Aminkatalysatoren. Die Schaumstoffe zeichnen sich durch eine verringerte Emission flüchtiger Substanzen aus. In den Beispielen wird dazu eine Poylolkomponente enthaltend Wasser als Treibmittel mit einer Kombination katalytisch aktiver Amine vermischt. In Beispiel 1 handelt es sich dabei um 1 Teil eines Dimethylaminohexanols und 3 Teilen DMAPA. Beide Amine werden ohne Zugabe von Lösungsmitteln eingesetzt.

Das Patent US 4,456,696 offenbart Polyurethan-Schaumstoffe und ein Verfahren zu deren Herstellung. Als Katalysator wird eine Aminverbindung in Kombination mit einem Metallsalz eingesetzt. In Beispiel 4 wird als Katalysator eine 50 Gew.-% Lösung von DMAPA in Diethylenglykol (DEG) eingesetzt, zusammen mit einer 50 Gew.-% Lösung von Zinnoctoat in Dioctylphthalat. DMAPA liegt dabei partiell als Salz vor. Die Katalysatormischung wird der Polyolkomponente zugegeben, welche mit einem Polyisocyanat in Anwesenheit von Wasser und Methylenchlorid als Treibmittel verschäumt wird.

Die Offenlegungsschrift EP 2868679 offenbart eine Katalysatormischung zur Herstellung von Polyurethan-Schaumstoffen. In Beispiel 1 dieses Dokuments wird eine Katalysatormischung verwendet, die 22,4 Gew.-% DMAPA enthält, sowie 47 Gew.-% Wassser als Lösungsmittel und 30,6 Gew.-% Salicylsäure. 75 Teile dieser Lösung werden 25 Teile Triethylendiamin als weiterer Aminkatalysator zugegeben. Die so erhaltene Katalysatormischung führt zu einem vorteilhaften Aushärtungsverhalten und wird verwendet, um Polyurethan-Schäume herzustellen, die einen hohen Grad an Offenzelligkeit aufweisen.

Besonders bei der Herstellung von Polyurethanschaumstoffen spielen tertiäre Amine eine wichtige Rolle, da hier die sogenannte Treibreaktion - Wasser reagiert mit Isocyanat unter Bildung von Kohlendioxid als Treibgas - und die Gelreaktion - Polyole reagieren mit Isocyanaten zu Urethanen, was zu einer Steigerung der Molmasse und entsprechender Vergelung führt - genau aufeinander abgestimmt sein müssen, damit ein qualitativ hochwertiger Schaum entstehen kann.

Polyurethanschäume sind zelluläre und/oder mikrozelluläre Polyurethanmaterialen und können grob in geschlossenzellige oder teilweise geschlossenzellige Polyurethanhartschaumstoffe und offenzellige oder teilweise offenzellige Polyurethanweichschaumstoffe unterteilt werden. Polyurethanhartschaumstoffe werden vorwiegend als Dämmmaterialien zum Beispiel in Kühlschranksystemen oder bei der Wärmeisolation von Gebäuden eingesetzt. Polyurethanweichschaumstoffe werden in einer Vielzahl von technischen Anwendungen in Industrie und privatem Bereich eingesetzt, beispielsweise zur Geräuschdämmung, zur Herstellung von Matratzen oder zur Polsterung von Möbeln. Einen besonders wichtigen Markt für verschiedene Typen von PU-Schäumen, wie konventionelle Weichschaumstoffe auf Ether- oder Esterpolyolbasis, Kaltweichschaumstoffe, im Folgenden auch als Kaltschäume (häufig auch als "High Resilience" (HR) Schäume) bezeichnet, und Hartschäume, sowie Schäume deren Eigenschaften zwischen diesen Klassifizierungen liegen, stellt die Automobilindustrie dar. Es können hier zum Beispiel Hartschäume als Dachhimmel, Esterschäume zur Innenverkleidung der Türen sowie für ausgestanzte Sonnenblenden, Kalt- und Weichschäume für Sitzsysteme verwendet werden.

Mit Blick auf Weichschaumstoffe kann auch zwischen Kaltweichschaumstoffen und Heißweichschaumstoffen unterschieden werden, wie z.B. in EP 2042534 A1 beschrieben.

Eine Herausforderung bei der Bereitstellung von Polyurethansystemen und insbesondere den Polyurethanschaumstoffen stellen die Produktemissionen dar. Diese sollen am besten so gering wie möglich sein.

Insbesondere die Anforderungen der Automobilhersteller an ihre Schaumzulieferer sowie die Anforderungen der Matratzen- und Polstermöbel-Industrie bezüglich der Emissionsspezifikationen von Polyurethansystemen verschärfen sich in den letzten Jahren kontinuierlich. Gegenstand analytischer Bestimmungen ist hierbei unter anderem das Fogging-Verhalten (Fogging meint den sogenannten Fogging-Niederschlag an der Windschutzscheibe durch Kondensation flüchtiger Bestandteile, die bei Raumtemperatur leicht kondensieren) von Werkstoffen in Automobilinnenräumen um die Fahrsicherheit zu erhöhen, sowie der Gehalt an flüchtigen organischen Bestandteilen (VOC = volatile organic compound) in diesen Werkstoffen durch Thermodesorption, zum Beispiel zusammengefasst im Analyseverfahren nach der Prüfmethode VDA 278 des Verbandes der Automobilindustrie, zuletzt aktualisiert im Oktober 2011. Auch Verfahren bei Raumtemperatur können für die Einstufung von Bedeutung sein, so beispielsweise Prüfkammerverfahren nach der DIN-Norm DIN EN ISO 16000-9:2008-04, die insbesondere für Anwendungen im Matratzen- und Polstermöbel-Bereich von Relevanz sind. Neben der quantitativen Bestimmung der Gesamtemissionen (VOC und Fog) verlangen einige Methoden auch die Zuordnung der Emissionen zu einzelnen chemischen Verbindungen. So stehen bei Schadstoffprüfungen unabhängiger Prüf- und Zertifizierungssysteme, beispielsweise für textile Roh-, Zwischen- und Endprodukte aller Verarbeitungsstufen im Rahmen des Öko-Tex Standard 100 auch Amine als potentielle Schadstoffe im Fokus der Betrachtung. Die Vorgaben für Grenzwerte zur Erlangung solcher Zertifikate finden sich oft in den Anforderungen der Schaumstoffspezifikationen bei der Herstellung von Polyurethanschäumen wieder, insbesondere wenn die Schaumstoffe für die Automobil-, Polstermöbel- oder Matratzen-Industrie hergestellt werden. Die konstant verschärften Einstufungen und Grenzwerte für Amine erfordern je nach Anwendung und Anforderung eine kontinuierliche Anpassung der Formulierungen und teilweise sogar eine Substitution etablierter stickstoffhaltiger Verbindungen, insbesondere von Amin-Katalysatoren, durch neue Technologien.

Ein besondere Herausforderung bei der Polyurethanschaumherstellung ist, dass durch die Verwendung von emissionsoptimierten Amin-Katalysatoren keine Nachteile beim Verschäumungsprozess und bezüglich der Eigenschaften des fertigen Polyurethansystems auftreten sollen. In diesem Zusammenhang steht besonders die Aktivität der Katalysatoren im Fokus. Es ist hinreichend bekannt, dass emissionsoptimierte Amin-Katalysatoren in der Regel eine geringere katalytische Wirkung aufweisen als konventionelle nichtreaktive Amin-Katalysatoren. Dies kommt daher, da hier in der Regel hochmolekulare Amine oder isocyanat-reaktive Gruppen tragende Amine, so genannte reaktive Amine, eingesetzt werden. Hochmolekulare Amine sind aufgrund des hohen Molgewichts zwar nicht mehr flüchtig, emittieren schwieriger aus dem Schaum und weisen eine geringere Molekülbeweglichkeit auf, was allerdings auch die katalytische Wirkung verringert. Reaktive Amine reagieren über ihre funktionellen Gruppen, meist OH- oder NH-Gruppen, in die PU-Matrix ein, sind so auch in ihrer Mobilität gehindert und führen so zu geringeren Amin-Emissionen. In beiden Fällen müssen teils erheblich größere Mengen an Amin-Katalysatoren eingesetzt werden als bei etablierten nicht-reaktiven Amin-Katalysatoren. Außerdem erfüllen teilweise selbst etablierte reaktive Amin-Katalysatoren durch die oben beschriebenen Verschärfungen der Grenzwertwerte nicht mehr die Anforderungen der Emissionstests (z.B. VDA 278).

Eine weitere Schwierigkeit, besonders in Zusammenhang mit der Verwendung von reaktiven Aminen, stellt auch die sogenannte Rekatalyse dar. Katalysatoren beschleunigen durch das Verringern der Aktivierungsbarriere nicht nur die Hin- sondern auch die Rückreaktion. Schäume, die mit reaktiven Aminen hergestellt wurden, zeigen somit oft ein deutlich verschlechtertes Alterungsverhalten, beispielsweise im Feuchtwärme-Alterungstest (Humid Aging) oder bei trockener Wärmealterung.

Eine weitere Schwierigkeit besteht darin, dass vor allem reaktive Amin-Katalysatoren zu einer störenden Geruchsbelästigung bei der Schaumherstellung, aber auch in Bezug auf den fertigen Schaum führen können.

Es besteht deshalb ganz allgemein ein kontinuierlicher Bedarf an weiteren Katalysatoren, vorzugsweise stickstoffhaltigen Katalysatoren, insbesondere Aminen oder Amin-Mischungen, die sich gut verarbeiten lassen, eine hohe katalytische Aktivität aufweisen, sicher zu handhaben sind und zur Herstellung von emissionsarmen oder allenfalls mit geringen Emissionen behafteten Polyurethanen und Polyurethanschaumstoffen geeignet sind, vorzugsweise geeignet zur Herstellung von geruchsarmen Polyurethansystemen, ohne dabei wichtige Schaumeigenschaften wie die Schaumhärte oder das Alterungsverhalten negativ zu beeinflussen.

Die konkrete, zu lösende Aufgabe der vorliegenden Erfindung war vor diesem Hintergrund, die Bereitstellung von Amin-emissionsarmen oder allenfalls mit geringen Amin-Emissionen behafteten Polyurethanen, insbesondere von Polyurethanschaumstoffen, bevorzugt Polyurethanweichschaumstoffen, die vorzugsweise geruchsarm sind, zu ermöglichen.

Überraschenderweise wurde gefunden, dass der Gegenstand der vorliegenden Erfindung die vorgenannte Aufgabe löst. Bei dem Gegenstand der vorliegenden Erfindung handelt es sich um die Verwendung einer stickstoffhaltige Verbindung(en) enthaltenden Mischung (M) bei der Herstellung von Polyurethanen, insbesondere Polyurethanschaumstoffen, bevorzugt Polyurethanweichschaumstoffen, wobei die genannte Mischung (M) folgende Bestandteile enthält
(a) N,N-Dimethylaminopropylamin in einer Menge von 40%-95 Gew.-%,
(b) Wasser in einer Gesamtmenge von ≥ 10 Gew.-%, vorzugsweise 10-60 Gew.-%, insbesondere 10-40 Gew.-%,
(c) zumindest ein Amin ausgewählt aus der Gruppe 1,1'-{[3-(Dimethylamino)propyl]imino}bis-2-propanol, Bis(3-dimethylaminopropyl)amin und/oder 1-[Bis[3-(dimethylamino)propyl]amino]-2-propanol in einer Gesamtmenge von ≥ 5 Gew.-%,
Gew.-% jeweils bezogen auf die gesamte Mischung (M).

Die einzusetzende Mischung (M) muss demnach mindestens N,N-Dimethylaminopropylamin sowie ein Lösungsmittel enthalten, vorzugsweise ist aber mindestens eine weitere stickstoffhaltige Verbindung enthalten, insbesondere wie weiter unten genauer erläutert.

Die vorliegende Erfindung ermöglicht die Bereitstellung von Amin-emissionsarmen oder allenfalls mit geringen Amin-Emissionen behafteten Polyurethanen, insbesondere von Polyurethanschaumstoffen, bevorzugt Polyurethanweichschaumstoffen, die vorzugsweise geruchsarm sind.

"Amin-emissionsarm" umfasst im Sinne der vorliegenden Erfindung insbesondere, dass das Polyurethansystem, bevorzugt der Polyurethanschaumstoff, weiter bevorzugt der Polyurethanweichschaum, besonders bevorzugt der Polyurethanheißweichschaum, vorzugsweise zur Herstellung von Matratzen und/oder Polstermöbeln, eine Amin-Emission von ≥ 0 µg/m³ und ≤ 40 µg/m³, vorzugsweise ≤ 10 µg/m³, besonders bevorzugt ≤ 5 µg/m³, aufweist, entsprechend ermittelt nach dem Prüfkammerverfahren nach DIN-Norm DIN EN ISO 16000-9:2008-04, 24 Stunden nach Prüfkammerbeladung,
und/oder dass das Polyurethansystem, bevorzugt der Polyurethanschaumstoff, insbesondere der Polyurethanweichschaum, besonders bevorzugt der Polyurethankaltweichschaum vorzugsweise zur Herstellung von Polyurethanen für die Anwendung in der Automobilindustrie, insbesondere in Automobilinnenräumen, beispielsweise als Dachhimmel, Innenverkleidung von Türen, ausgestanzte Sonnenblenden, Lenkräder und/oder Sitzsysteme, keine Amin-Emissionen besitzt, die zu einer Verfärbung von PVC-Folien gemäß der Volkswagen Prüfvorschrift VW PV 3937 führt, d.h. dass die graue PVC-Folie vorzugsweise nicht verfärbt, insbesondere aber nicht rötlich verfärbt wird,
und/oder dass das Polyurethansystem, bevorzugt der Polyurethanschaumstoff, insbesondere der Polyurethanweichschaum, besonders bevorzugt der Polyurethankaltweichschaum, vorzugsweise zur Herstellung von Polyurethanen für die Anwendung in der Automobilindustrie, insbesondere in Automobilinnenräumen, beispielsweise als Dachhimmel, Innenverkleidung von Türen, ausgestanzte Sonnenblenden, Lenkräder und/oder Sitzsysteme, eine Amin-Emission, im Folgenden auch als VOC-Emission oder VOC-Wert nach VDA 278 bezeichnet (VOC = Volatile Organic Compounds), von ≥ 0 µg/g und ≤ 40 µg/g, vorzugsweise ≤ 10 µg/g, besonders bevorzugt ≤ 5 µg/g, aufweist, entsprechend des VDA 278 Analyseverfahrens in der Version vom Oktober 2011, "Thermodesorptionsanalyse organischer Emissionen zur Charakterisierung nichtmetallischer KFZ-Werkstoffe" (30 Minuten bei 90 °C),
und/oder das das Polyurethansystem, insbesondere der Polyurethanweichschaum, besonders bevorzugt der Polyurethankaltweichschaum, vorzugsweise zur Herstellung von Polyurethanen für die Anwendung in der Automobilindustrie, insbesondere in Automobilinnenräumen, beispielsweise als Dachhimmel, Innenverkleidung von Türen, ausgestanzte Sonnenblenden, Lenkräder und/oder Sitzsysteme, eine Amin-Emission, im Folgenden auch Fog-Emission oder Fog-Wert nach VDA 278 (Fog: schwer flüchtige Substanzen, die bei Raumtemperatur leicht kondensieren und zum Foggingbeschlag an der Windschutzscheibe beitragen) genannt, von ≥ 0 µg/g und ≤ 40 µg/g, vorzugsweise ≤ 10 µg/g, besonders bevorzugt ≤ 5 µg/g, aufweist, entsprechend des VDA 278 Analyseverfahrens in der Version vom Oktober 2011 (60 Minuten bei 120 °C). VDA ist der Verband der Automobilindustrie (www.vda.de). Je nach Anwendungsgebiet der Polyurethansysteme, insbesondere der Polyurethanschaumstoffe, beispielsweise bei der Anwendung in der Automobilindustrie, kann es je nach Fahrzeughersteller-Spezifikation Grenzen für die Gesamtemissionen flüchtiger organischer Verbindungen (VOC_{ges}, und/oder Fog_{ges}) geben, beispielsweise VOC_{ges} ≤ 100 µg/g und/oder Fog_{ges} ≤ 250 µg/g. Umso wichtiger ist es, dass der Beitrag der Amine zur Gesamtemission (VOC_{Amin} und/oder Fog_{Amin}) möglichst klein ist. Die im Sinne der vorliegenden Erfindung gewählten Bestimmungsmethoden nach Prüfvorschrift VW PV 3937 und die VDA 278 sind im Beispielteil detailliert erläutert.

Die vorliegende Erfindung ermöglicht somit die Bereitstellung von Polyurethansystemen, vorzugsweise von Polyurethanschaumstoffen, insbesondere von Polyurethanweichschaumstoffen, die hinsichtlich Amin-Emissionen auch bei unterschiedlichen Anforderungen besonders emissionsarm, bevorzugt frei von solchen Emissionen sind.

Bevorzugte Untergrenzen für den Einsatz von N,N-Dimethylaminopropylamin in der erfindungsgemäßen Mischung (M) können insbesondere auch bei 40 Gew.-%, 50 Gew.-%, 60 Gew.-% oder 70 Gew.-% liegen, das heißt bevorzugte Mengenbereiche von N,N-Dimethylaminopropylamin in der erfindungsgemäßen Mischung (M) können zum Beispiel sein, 50-95 Gew.-%, 60-95 Gew.-% oder 70-95 Gew.-%, Gew.-% jeweils bezogen auf die gesamte Mischung (M).

Gemäß einer bevorzugten Ausführungsform der Erfindung weist die erfindungsgemäße Mischung (M) die Komponente (c) in einer Gesamtmenge von 10-95 Gew.-%, insbesondere 10-60 Gew.-%, enthält, Gew.-% jeweils bezogen auf die gesamte Mischung (M).

Bevorzugte Untergrenzen für den Einsatz der Komponente (c) in der erfindungsgemäßen Mischung (M) können insbesondere auch bei 15 Gew.-%, 20 Gew.-%, 25 Gew.-%, 30 Gew.-%, 35 Gew.-% oder 40 Gew.-% liegen, das heißt bevorzugte Mengenbereiche der weiteren stickstoffhaltigen Verbindungen (ungleich N,N-Dimethylaminopropylamin) in der erfindungsgemäßen Mischung (M) können zum Beispiel sein, 15-60 Gew.-%, 20-60 Gew.-%, 25-60 Gew.-%, 30-60 Gew.-%, 35-60 Gew.-% oder 40-60 Gew.-%, Gew.-% jeweils bezogen auf die Gesamteinsatzmenge der weiteren stickstoffhaltigen Verbindungen in der gesamten Mischung (M).

Alle in erfindungsgemäßen Mischungen (M) einsetzbaren stickstoffhaltigen Verbindungen (einschließlich N,N-Dimethylaminopropylamin) können auch protoniert und/oder quaternisiert (einfach oder mehrfach quaternisiert, vorzugsweise einfach quaternisiert) im Sinne dieser Erfindung eingesetzt werden.

Zur möglichen Quaternisierung von stickstoffhaltigen Verbindungen, die in der erfindungsgemäßen Mischung (M) eingesetzt werden können, können alle als Quaternisierungsreagenz bekannten Reagenzien eingesetzt werden. Vorzugsweise werden als Quaternisierungsmittel Alkylierungsmittel, wie z. B. Dimethylsulfat, Methylchlorid oder Benzylchlorid, bevorzugt Methylierungsmittel wie insbesondere Dimethylsulfat verwendet. Ebenso kann mit Alkylenoxiden wie zum Beispiel Ethylenoxid, Propylenoxid oder Butylenoxid, vorzugsweise mit anschließender Neutralisation mit anorganischen oder organischen Säuren, quaternisiert werden.

Stickstoffhaltige Verbindungen, die in der erfindungsgemäßen Mischung (M) eingesetzt werden können, können durch Umsetzung mit organischen oder anorganischen Säuren in die entsprechenden protonierten Verbindungen überführt werden. Diese protonierten Verbindungen können z.B. bevorzugt sein, wenn z.B. eine verlangsamte Polyurethan-Reaktion erzielt werden soll oder wenn das Reaktionsgemisch bei der Anwendung ein verbessertes Fließverhalten haben soll.

Als organische Säuren können zum Beispiel insbesondere alle nachfolgend genannten organischen Säuren, beispielsweise Carbonsäuren mit 1 bis 36 Kohlenstoffatomen (aromatisch oder aliphatisch, linear oder verzweigt), beispielsweise Ameisensäure, Milchsäure, 2-Ethylhexansäure, Salicylsäure und Neodecansäure, oder auch polymere Säuren wie z.B. Polyacryl- oder Polymethacrylsäuren eingesetzt werden. Als anorganische Säuren können z.B. Phosphor-basierende Säuren, Schwefel-basierende Säuren oder Bor-basierende Säuren eingesetzt werden.

Im Sinne dieser Erfindung ist aber der Einsatz von Mischungen (M), die nicht quaternisierte oder nicht protonierte stickstoffhaltigen Verbindungen enthalten, besonders bevorzugt.

Die erfindungsgemäß verwendeten Mischungen (M) sind als Katalysatoren zur Herstellung von Polyurethanen, insbesondere von Polyurethanschaumstoffen, bevorzugt von Polyurethanweichschaumstoffen, besonders bevorzugt von Polyurethankaltweichschaumstoffen besonders geeignet. Dies entspricht einer bevorzugten Ausführungsform der Erfindung. Sie können sowohl die Gel- als auch die Treib-Reaktion bei der Verschäumung, sowie vorteilhafterweise weitere Isocyanat-Reaktionen, wie im Folgenden beschrieben, katalysieren.

Vorteilhafterweise ermöglicht die vorliegende Erfindung außerdem die Bereitstellung von geruchsarmen Polyurethansystemen, vorzugsweise Polyurethanschaumstoffen, insbesondere von Polyurethanweichschaumstoffen. Geruchsarm bedeutet hier, dass das resultierende Polyurethansystem einen möglichst geringen Produktgeruch aufweist, was insbesondere durch olfaktorische Überprüfung durch ein Panel von geruchlich geschulten Personen überprüfbar ist.

Vorteilhafterweise trägt die vorliegende Erfindung außerdem zum Erhalt oder sogar zur Verbesserung des Alterungsverhaltens, insbesondere zur Hitzebeständigkeit und/oder Alterungsbeständigkeit bei Temperierung (Wärmealterung), von Polyurethansystemen, vorzugsweise Polyurethanschaumstoffen, insbesondere von Polyurethanweichschaumstoffen bei. Solche Alterungsphänomene sind oft eng mit der Wahl des Katalysatorsystems zur Herstellung der Polyurethansysteme verknüpft und führen in der Regel zu einer Materialermüdung. Mit den erfindungsgemäßen Mischungen (M) kann die Hitzebständigkeit und/oder Haltbarkeit der entsprechenden Polyurethansysteme gegenüber Polyurethansystemen, die mit konventionellen Katalysatoren nach dem Stand der Technik hergestellt wurden, vorteilhafterweise erhalten oder sogar verbessert werden. Vorteilhafterweise kann dieser Effekt insbesondere bei Polyurethanschaumstoffen, bevorzugt Weichblockschaumstoffen und/oder Form- und hochelastischen Weichschaumstoffen, insbesondere im Sinne einer Feuchtwärme-Alterung oder einer trockenen Wärmealterung nach der DIN-Norm DIN EN ISO 2440:2000-01 beobachtet werden, für Weichblockschaumstoffe insbesondere nach trockener Wärmealterung bei einer Temperatur von 70, 100, 120, 125 und/oder 140 °C und einer Alterungsdauer von 2, 4, 16, 22, 24, 48, 72 und/oder 168 Stunden bevorzugt bei 2, 24 und/oder 168 Stunden, wenn bei der Verschäumung erfindungsgemäße Mischungen (M) als Alternativen zu üblichen Katalysatoren nach dem Stand der Technik eingesetzt werden.

Vorteilhafterweise ermöglicht die vorliegende Erfindung eine erleichterte Handhabbarkeit und auch ein besseres Processing bei der Herstellung von Polyurethansystemen, insbesondere von Weichschaumstoffen, ganz besonders von Form- und hochelastischen Weichschaumstoffen. So konnte z.B. gefunden werden, dass bei der Wiederverwendung der Vorratsgebinde, also nach einfachem oder mehrmaligen Öffnen des Mischungs-Gebindes, enthaltend die erfindungsgemäßen Mischungen (M), eine viel konstantere und reproduzierbarerer Performance bei der Verschäumung erzielt werden kann, als bei nicht erfindungsgemäßen Amin-Mischungen, die insbesondere ebenfalls N,N-Dimethylamino-propyl-amin enthalten. Insbesondere findet auch keine negative Beeinflussung der gewünschten Materialeigenschaften statt, beispielsweise im Sinne von Schaumstörungen. Dies bedeutet eine enorme Arbeitserleichterung für den Anwender.

Ein weiterer Vorteil der vorliegenden Erfindung liegt darin, dass sie die Bereitstellung von PU-System ermöglicht, die mit Blick auf andere Kunststoffe verfärbungsarm oder sogar ganz verfärbungsfrei sind. Im Rahmen dieser Erfindung wurde festgestellt, dass die Anwesenheit von Polyurethansystemen, insbesondere von Polyurethanschaumstoffen, insbesondere in Automobilinnenräumen, dazu führen kann, dass andere Kunstoffteile, insbesondere bestehend aus PVC, in unerwünschter Weise verfärbt werden. Beispielsweise kann es zur Verfärbung von Kunststoffbezügen, beispielsweise dem Kunstoffbezug von Dachhimmeln in Automobilen, kommen. Dies widerstrebt dem ästhetischen Empfinden des Verbrauchers außerordentlich. Wie im Rahmen dieser Erfindung herausgefunden werden konnte, sind diese Verfärbungen wenigstens zum Teil auf die Anwesenheit von Polyurethansystemen, insbesondere Schaumstoffen, zurückzuführen. Jetzt wurde überraschend gefunden, dass die erfindungsgemäß bereitgestellten Polyurethansysteme zumindest zu geringeren Verfärbungen von diesen Kunststoffen führen bis hin zur Verfärbungsfreiheit, verglichen mit Polyurethansystemen nach dem Stand der Technik, beinhaltend konventionelle Amin-Katalysatoren. Also ermöglicht unsere Erfindung somit die Bereitstellung von Polyurethansystemen, insbesondere von Polyurethanschaumstoffen, vorzugsweise von Polyurethanen für die Anwendung in der Automobilindustrie, insbesondere in Automobilinnenräumen, beispielsweise als Dachhimmel, Innenverkleidungen von Türen, ausgestanzte Sonnenblenden, Lenkräder und/oder Sitzsysteme, wobei die erfindungsgemäß bereitgestellten Polyurethansysteme insbesondere zu geringeren Verfärbungen von Kunststoffen, insbesondere Kunststoffbezügen, insbesondere in Automobilinnenräumen führen, verglichen mit dem Einsatz konventioneller Polyurethansysteme. Dies kann insbesondere anhand eines PVC-Verfärbungs-Tests gemäß der Volkswagen-Prüfvorschrift VW PV 3937 gezeigt werden.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Bei Prozentangaben handelt es sich, wenn nicht anders angegeben, um Angaben in Gewichtsprozent. Werden nachfolgend Mittelwerte angegeben, so handelt es sich, wenn nicht anders angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

Unter Polyurethan (PU) wird im Rahmen der vorliegenden Erfindung insbesondere ein Produkt erhältlich durch Reaktion von Polyisocyanaten und Polyolen bzw. Verbindungen mit Isocyanat-reaktiven Gruppen verstanden. Es können hierbei neben dem Polyurethan auch weitere funktionelle Gruppen gebildet werden, wie z.B. Uretdione, Carbodiimide, Isocyanurate, Allophanate, Biurete, Harnstoffe und/oder Uretimine. Daher werden unter PU im Sinne der vorliegenden Erfindung sowohl Polyurethan als auch Polyisocyanurat, Polyharnstoffe und Uretdion-, Carbodiimid-, Allophanat-, Biuret- und Uretimin-Gruppen enthaltende Polyisocyanat-Reaktionsprodukte verstanden. Unter Polyurethanschaum (PU-Schaum) wird im Rahmen der vorliegenden Erfindung Schaum verstanden, der als Reaktionsprodukt basierend auf Polyisocyanaten und Polyolen bzw. Verbindungen mit Isocyanat-reaktiven Gruppen erhalten wird. Es können hierbei neben dem Namen gebenden, Polyurethan auch weitere funktionelle Gruppen gebildet werden, wie z.B. Allophanate, Biurete, Harnstoffe, Carbodiimide, Uretdione, Isocyanurate oder Uretimine. Daher werden unter PU-Schäumen im Sinne der vorliegenden Erfindung sowohl Polyurethanschäume (PUR-Schäume) als auch Polyisocyanurat-Schäume (PIR-Schäume) verstanden. Bevorzugte Polyurethanschäume sind Polyurethanweichschaumstoffe, Polyurethanhartschaumstoffe und Polyurethanintegralschaumstoffe. Hierin besonders bevorzugt sind konventionelle Polyurethanweichschäume auf Ether- oder Esterpolyolbasis, hochelastische Polyurethankaltschaumstoffe (häufig auch als "High Resilience" (HR) Schäume bezeichnet), viskoelastische Polyurethanschäume, halbharte Polyurethanschäume und Polyurethanhartschaumstoffe, sowie Schäume deren Eigenschaften zwischen diesen Klassifizierungen liegen und in der Automobilindustrie eingesetzt werden.

Gemäß der Erfindung enthält die in der Mischung (M) eingesetzte Komponente (c) zumindest ein Amin ausgewählt aus der Gruppe umfassend 1,1' -{[3-(Dimethylamino)propyl]imino}bis-2-propanol, Bis(3-dimethylaminopropyl)amin, und/oder 1-[Bis[3-(dimethylamino)propyl]amino]-2-propanol in einer Gesamtmenge von ≥ 5 Gew.-%, bevorzugt 10-95 Gew.-%, insbesondere 10-60 Gew.-%, Gew.-% jeweils bezogen auf die gesamte Mischung (M). Bevorzugte Untergrenzen für den Einsatz der vorgenannten weiteren stickstoffhaltigen Verbindungen als Komponente (c) in der erfindungsgemäßen Mischung (M) können insbesondere auch bei 15 Gew.-%, 20 Gew.-%, 25 Gew.-%, 30 Gew.-%, 35 Gew.-% oder 40 Gew.-% liegen, das heißt bevorzugte Mengenbereiche der vorgenannten weiteren stickstoffhaltigen Verbindungen in der erfindungsgemäßen Mischung (M) können zum Beispiel sein, 15-60 Gew.-%, 20-60 Gew.-%, 25-60 Gew.-%, 30-60 Gew.-%, 35-60 Gew.-% oder 40-60 Gew.-%, Gew.-% jeweils bezogen auf die Gesamteinsatzmenge der vorgenannten weiteren stickstoffhaltigen Verbindungen in der gesamten Mischung (M).

Gemäß einer weiteren besonders bevorzugten Ausführungsform der Erfindung enthält die in der Mischung (M) eingesetzte Komponente (c) zumindest Bis(3-dimethylaminopropyl)amin, in einer Menge von ≥ 5 Gew.-%, bevorzugt 10-95 Gew.-%, insbesondere 10-60 Gew.-%, Gew.-% jeweils bezogen auf die gesamte Mischung (M). Bevorzugte Untergrenzen für den Einsatz der vorgenannten weiteren stickstoffhaltigen Verbindung als Komponente (c) in der erfindungsgemäßen Mischung (M) können insbesondere auch bei 15 Gew.-%, 20 Gew.-%, 25 Gew.-%, 30 Gew.-%, 35 Gew.-% oder 40 Gew.-% liegen, das heißt bevorzugte Mengenbereiche der vorgenannten weiteren stickstoffhaltigen Verbindung in der erfindungsgemäßen Mischung (M) können zum Beispiel sein, 15-60 Gew.-%, 20-60 Gew.-%, 25-60 Gew.-%, 30-60 Gew.-%, 35-60 Gew.-% oder 40-60 Gew.-%, Gew.-% jeweils bezogen auf die Einsatzmenge der vorgenannten weiteren stickstoffhaltigen Verbindung in der gesamten Mischung (M).

Gemäß einer ganz besonders bevorzugten Ausführungsform der Erfindung enthält die in der Mischung (M) eingesetzte Komponente (c) zumindest 1,1' -{[3-(Dimethylamino)propyl]imino}bis-2-propanol, in einer Menge von ≥ 5 Gew.-%, bevorzugt 10-95 Gew.-%, insbesondere 10-60 Gew.-%, Gew.-% jeweils bezogen auf die gesamte Mischung (M). Bevorzugte Untergrenzen für den Einsatz der vorgenannten weiteren stickstoffhaltigen Verbindung als Komponente (c) in der erfindungsgemäßen Mischung (M) können insbesondere auch bei 15 Gew.-%, 20 Gew.-%, 25 Gew.-%, 30 Gew.-%, 35 Gew.-% oder 40 Gew.-% liegen, das heißt bevorzugte Mengenbereiche der vorgenannten weiteren stickstoffhaltigen Verbindung in der erfindungsgemäßen Mischung (M) können zum Beispiel sein, 15-60 Gew.-%, 20-60 Gew.-%, 25-60 Gew.-%, 30-60 Gew.-%, 35-60 Gew.-% oder 40-60 Gew.-%, Gew.-% jeweils bezogen auf die Einsatzmenge der vorgenannten weiteren stickstoffhaltigen Verbindung in der gesamten Mischung (M).

Wenn die erfindungsgemäße Mischung (M) einen Flammpunkt > 60 °C aufweist, gemessen nach dem Pensky-Martens Verfahren mit geschlossenem Tiegel gemäß DIN EN ISO 2719:2003-09, insbesondere wie im Beispielteil aufgeführt, so liegt eine weitere bevorzugte Ausführungsform der Erfindung vor.

Vorzugsweise werden die erfindungsgemäßen Mischungen (M) bei der erfindungsgemäßen Herstellung von Polyurethansystemen, vorzugsweise zur Herstellung von Polyurethanbeschichtungen, Polyurethanadhäsiven, Polyurethandichtmitteln, Polyurethanelastomeren oder insbesondere zur Herstellung von Polyurethanschaumstoffen als Katalysatoren verwendet. Die erfindungsgemäßen Mischungen (M) können dabei ergänzend zu üblichen Katalysatoren oder als Ersatz für übliche Katalysatoren verwendet werden. Insbesondere können die erfindungsgemäßen Mischungen (M) als Ersatz für andere stickstoffhaltige Katalysatoren (Amin-Katalysatoren oder Amine), und je nach Anwendung als teilweiser oder vollständiger Ersatz für übliche metallhaltige Katalysatoren nach dem Stand der Technik verwendet werden.

Es versteht sich von selbst, dass der Fachmann zur Herstellung der unterschiedlichen Polyurethansysteme, insbesondere der unterschiedlichen Polyurethanschaumstofftypen, beispielsweise von Heiß-, Kalt-, Ester-Polyurethanweichschaumstoffen oder Polyurethanhartschaumstoffen, die hierfür jeweils notwendigen Substanzen, wie Isocyanate, Polyole, Stabilisatoren, Tenside, etc. entsprechend auswählt, um den jeweils gewünschten Polyurethan-Typ, insbesondere Polyurethanschaum-Typ, zu erhalten.

Bei der erfindungsgemäßen Herstellung von Polyurethansystemen, insbesondere von Polyurethanschaumstoffen, wird im Rahmen der erfindungsgemäßen Verwendung vorzugsweise zumindest eine erfindungsgemäße Mischung (M), zumindest eine Polyolkomponente und zumindest eine Isocyanatkomponente, miteinander reagiert. Die erfindungsgemäße Verwendung, wobei bei der Herstellung des Polyurethans, insbesondere Polyurethanschaums, eine Zusammensetzung bereitgestellt wird, die zumindest die Mischung (M), sowie weiterhin zumindest eine Polyolkomponente und zumindest eine Isocyanatkomponente aufweist, und diese Zusammensetzung reagiert wird, entspricht einer bevorzugten Ausführungsform der Erfindung.

Weitere Angaben zu den einsetzbaren Ausgangsstoffen, Katalysatoren sowie Hilfs- und Zusatzstoffen finden sich beispielsweise im Kunststoffhandbuch, Band 7, Polyurethane, Carl-Hanser-Verlag München, 1. Auflage 1966, 2. Auflage 1983 und 3. Auflage 1993. Die nachstehenden Verbindungen, Komponenten und Zusatzstoffe sind lediglich beispielhaft genannt und können durch andere dem Fachmann bekannte Stoffe ersetzt und/oder ergänzt werden.

Erfindungsgemäße Mischungen (M) werden im Rahmen der Erfindung vorzugsweise in einem Massenanteil von 0,01 bis 20,0 Teilen (pphp), bevorzugt 0,01 bis 5,00 Teilen und besonders bevorzugt 0,02 bis 3,00 Teilen bezogen auf 100 Teile (pphp) Polyolkomponente eingesetzt. Die vorgenannten Massenanteile der Mischung (M) beziehen sich dabei auf die darin enthaltenen stickstoffhaltigen Verbindungen.

Als Isocyanatkomponenten werden im Rahmen der vorliegenden Erfindung vorzugsweise ein oder mehrere organische Polyisocyanate mit zwei oder mehr Isocyanat-Funktionen eingesetzt. Als Polyolkomponenten werden vorzugsweise ein oder mehrere Polyole mit zwei oder mehr gegenüber Isocyanat reaktiven Gruppen, eingesetzt.

Als Isocyanatkomponenten geeignete Isocyanate im Sinne dieser Erfindung sind alle Isocyanate, die mindestens zwei Isocyanat-Gruppen enthalten. Generell können alle an sich bekannten aliphatischen, cycloaliphatischen, arylaliphatischen und vorzugsweise aromatischen mehrfunktionalen Isocyanate verwendet werden. Bevorzugt werden Isocyanate in einem Bereich von 60 bis 350 mol%, besonders bevorzugt in einem Bereich von 60 bis 140 mol%, relativ zu der Summe der isocyanatverbrauchenden Komponenten eingesetzt.

Beispielhaft genannt werden können hier Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6 (HMDI), cycloaliphatische Diisocyanate, wie Cyclohexan-1,3- und 1-4-diisocyanat sowie beliebige Gemische dieser Isomeren, 1-Isocyanato-3,35-trimethyl-5-isocyanatomethylcyclohexan (Isophorondiisocyanat oder kurz IPDI), 2,4- und 2,6-Hexahydrotoluylendiisocyanat sowie die entsprechenden Isomerengemische, und vorzugsweise aromatische Di- und Polyisocyanate, wie beispielsweise 2,4- und 2,6-Toluoldiisocyanat (TDI) und die entsprechenden Isomerengemische, Mischungen aus 2,4`- und 2,2`-Diphenylmethandiisocyanaten (MDI) und Polyphenylpolymethylenpolyisocyanate (Roh-MDI) und Mischungen aus Roh-MDI und Toluoldiisocyanaten (TDI). Die organischen Di- und Polyisocyanate können einzeln oder in Form ihrer Mischungen eingesetzt werden.

Es ist auch möglich, Isocyanate einzusetzen, die durch den Einbau von Urethan-, Uretdion-, Isocyanurat-, Allophanat- und anderen Gruppen modifiziert wurden, sogenannte modifizierte Isocyanate.

Besonders geeignete organische Polyisocyanate und daher besonders bevorzugt angewendet werden verschiedene Isomere des Toluoldiisocyanat (2,4- und 2,6-Toluoldiisocyanat (TDI), in reiner Form oder als Isomerengemische unterschiedlicher Zusammensetzung), 4,4`-Diphenylmethandiisocyanat (MDI), das so genannte "crude MDI" oder "polymere MDI" (enthält neben dem 4,4`- auch die 2,4`- und 2,2`-Isomeren des MDI und höherkernige Produkte) sowie das als "pure MDI" bezeichnete zweikernige Produkt aus überwiegend 2,4`- und 4,4`-Isomerengemischen bzw. deren Prepolymeren. Beispiele für besonders geeignete Isocyanate sind beispielsweise in EP 1712578, EP 1161474, WO 00/58383, US 2007/0072951, EP 1678232 und der WO 2005/085310 aufgeführt.

Als Polyolkomponente geeignete Polyole im Sinne der vorliegenden Erfindung sind alle organischen Substanzen mit mehreren gegenüber Isocyanaten reaktiven Gruppen, vorzugsweise OH-Gruppen, sowie deren Zubereitungen. Bevorzugte Polyole sind alle zur Herstellung von Polyurethan-Systemen, insbesondere Polyurethan-Schaumstoffen; üblicherweise verwendeten Polyetherpolyole und/oder Polyesterpolyole und/oder hydroxylgruppenhaltigen aliphatischen Polycarbonate, insbesondere Polyetherpolycarbonatpolyole und/oder Polyole natürlicher Herkunft, sogenannte "natural oil based polyols" (NOPs). Üblicherweise besitzen die Polyole eine Funktionalität von 1.8 bis 8 und zahlengemittelte Molekulargewichte im Bereich von 500 bis 15000. Üblicherweise kommen die Polyole mit OH-Zahlen im Bereich von 10 bis 1200 mg KOH/g zum Einsatz. Die zahlengemittelten Molekulargewichte werden üblicherweise durch Gelpermeationschromatographie (GPC), insbesondere mit Polypropylenglycol als Referenzsubstanz und Tetrahydrofuran (THF) als Elutionsmittel, bestimmt. Die OH-Zahlen können insbesondere nach der DIN-Norm DIN 53240:1971-12 bestimmt werden.

Polyetherpolyole können nach bekannten Verfahren hergestellt werden, beispielsweise durch anionische Polymerisation von Alkylenoxiden in Gegenwart von Alkalihydroxiden, Alkylialkoholaten oder Aminen als Katalysatoren und unter Zusatz mindestens eines Startermoleküls, dass bevorzugt 2 oder 3 reaktive Wasserstoffatome gebunden enthält oder durch kationische Polymerisation von Alkylenoxiden in Gegenwart von Lewis-Säuren wie beispielsweise Antimonpentachlorid oder Bortrifluorid-Etherat oder durch Doppelmetallcyanidkatalyse. Geeignete Alkylenoxide enthalten 2 bis 4 Kohlenstoffatome im Alkylenrest. Beispiele sind Tetrahydrofuran, 1,3-Propylenoxid, 1,2- bzw. 2,3-Butylenoxid; vorzugsweise werden Ethylenoxid und 1,2-Propylenoxid eingesetzt. Die Alkylenoxide können einzeln, kumulativ, blockweise, alternierend nacheinander oder als Mischungen verwendet werden. Als Startmoleküle kommen insbesondere Verbindungen mit mindestens 2, vorzugsweise 2 bis 8 Hydroxylgruppen oder mit mindestens zwei primären Aminogruppen im Molekül zum Einsatz. Als Startermoleküle eingesetzt werden können z.B. Wasser, 2-, 3- oder 4-wertige Alkohole wie Ethylenglykol, Propandiol-1,2 und -1,3, Diethylenglykol, Dipropylenglykol, Glycerin, Trimethylolpropan, Pentaerythrit, Rizinusöl usw., höhere polyfunktionelle Polyole, insbesondere Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin, oder Amine wie Anilin, EDA, TDA, MDA und PMDA, besonders bevorzugt TDA und PMDA. Die Wahl des geeigneten Startermoleküls ist abhängig von dem jeweiligen Anwendungsgebiet des resultierenden Polyetherpolyols bei der Polyurethanherstellung (z.B. werden zur Herstellung von Polyurethanweichschäumen andere Polyole verwendet als bei der Herstellung von Polyurethanhartschaumstoffen).

Polyesterpolyole basieren auf Estern mehrwertiger aliphatischer oder aromatischer Carbonsäuren, bevorzugt mit 2 bis 12 Kohlenstoffatomen. Beispiele für aliphatische Carbonsäuren sind Bernsteinsäure, Glutarsäure, Adipinsäure, Korksäure, Azelainsäure, Sebacinsäure, Decandicarbonsäure, Maleinsäure und Fumarsäure. Beispiele für aromatische Carbonsäuren sind Phthalsäure, Isophthalsäure, Terephthalsäure und die isomeren Naphthalindicarbonsäuren. Die Polyesterpolyole werden durch Kondensation dieser mehrwertigen Carbonsäuren mit mehrwertigen Alkoholen, vorzugsweise von Diolen oder Triolen mit 2 bis 12, besonders bevorzugt mit 2 bis 6 Kohlenstoffatomen, bevorzugt Trimethylolpropan und Glycerin erhalten.

Polyetherpolycarbonatpolyole sind Polyole, welche Kohlenstoffdioxid als Carbonat gebunden enthalten. Da Kohlenstoffdioxid bei vielen Prozessen in der chemischen Industrie in großen Mengen als Nebenprodukt entsteht, ist die Verwendung von Kohlendioxid als Comonomer in Alkylenoxid-Polymerisationen aus kommerzieller Sicht von besonderem Interesse. Ein teilweiser Ersatz von Alkylenoxiden in Polyolen durch Kohlendioxid hat das Potential, die Kosten für die Herstellung von Polyolen deutlich zu senken. Außerdem ist die Verwendung von CO₂ als Comonomer ökologisch sehr vorteilhaft, da diese Reaktion die Umsetzung eines Treibhausgases zu einem Polymer darstellt. Die Herstellung von Polyetherpolycarbonatpolyolen durch Anlagerung von Alkylenoxiden und Kohlendioxid an H-funktionelle Startsubstanzen unter Verwendung von Katalysatoren ist seit langem bekannt. Verschiedene Katalysatorsysteme können hierbei zum Einsatz kommen: Die erste Generation stellten heterogene Zink- oder Aluminiumsalze dar, wie sie beispielsweise in US-A 3900424 oder US-A 3953383 beschrieben sind. Des Weiteren sind mono- und binukleare Metallkomplexe zur Copolymerisation von CO2 und Alkylenoxiden erfolgreich eingesetzt worden (WO 2010/028362, WO 2009/130470, WO 2013/022932 oder WO 2011/163133). Die wichtigste Klasse von Katalysatorsystemen für die Copolymerisation von Kohlenstoffdioxid und Alkylenoxiden stellen die Doppelmetallcyanidkatalysatoren, auch als DMC-Katalysatoren bezeichnet, dar (US-A 4500704, WO 2008/058913). Geeignete Alkylenoxide und H-funktionelle Startsubstanzen sind solche, die auch zur Herstellung von carbonatfreien Polyetherpolyolen - wie oben beschrieben - eingesetzt werden.

Polyole auf Basis nachwachsender Rohstoffe "Natural oil based polyols" (NOPs) zur Herstellung von Polyurethanschäumen sind mit Blick auf die langfristig begrenzte Verfügbarkeit fossiler Ressourcen, namentlich Öl, Kohle und Gas, und vor dem Hintergrund steigender Rohölpreise von zunehmendem Interesse und bereits vielfach in solchen Anwendungen beschrieben (WO 2005/033167; US 2006/0293400, WO 2006/094227, WO 2004/096882, US 2002/0103091, WO 2006/116456 und EP 1678232). Mittlerweile sind auf dem Markt eine Reihe dieser Polyole von verschiedenen Herstellern verfügbar (WO 2004/020497, US 2006/0229375, WO 2009/058367). In Abhängigkeit vom Basis-Rohstoff (z.B. Sojabohnenöl, Palmöl oder Rizinusöl) und die daran angeschlossene Aufarbeitung ergeben sich Polyole mit unterschiedlichem Eigenschaftsbild. Hierbei können im Wesentlichen zwei Gruppen unterschieden werden: a) Polyole auf Basis nachwachsender Rohstoffe, die so weit modifiziert werden, dass sie zu 100 % zur Herstellung von Polyurethanen eingesetzt werden können (WO 2004/020497, US 2006/0229375); b) Polyole auf Basis nachwachsender Rohstoffe, die bedingt durch ihre Aufarbeitung und Eigenschaften nur zu einem gewissen Anteil das petrochemisch basierte Polyol ersetzen können (WO 2009/058367).

Eine weitere Klasse von einsetzbaren Polyolen stellen die sogenannten Füllkörperpolyole (Polymerpolyole) dar. Diese zeichnen sich dadurch aus, dass sie feste organische Füllstoffe bis zu einem Feststoffgehalt von 40 % oder mehr in disperser Verteilung enthalten. Einsetzbar sind unter anderem SAN-, PHD- und PIPA-Polyole. SAN-Polyole sind hochreaktive Polyole, welche ein Copolymer auf der Basis von Styrol/Acrylnitril (SAN) dispergiert enthalten. PHD-Polyole sind hochreaktive Polyole, welche Polyharnstoff ebenfalls in dispergierter Form enthalten. PIPA-Polyole sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Der Festkörperanteil, der je nach Anwendung bevorzugt zwischen 5 und 40 %, bezogen auf das Polyol liegt, ist für eine verbesserte Zellöffnung verantwortlich, so dass das Polyol insbesondere mit TDI kontrolliert verschäumbar wird und kein Schrumpfen der Schäume auftritt. Der Festkörper wirkt damit als wesentliche Prozesshilfe. Eine weitere Funktion besteht darin, über den Feststoffanteil die Härte zu kontrollieren, denn höhere Festkörperanteile bewirken eine größere Härte des Schaums. Die Formulierungen mit feststoffhaltigen Polyolen sind deutlich weniger eigenstabil und bedürfen daher neben der chemischen Stabilisierung durch die Vernetzungsreaktion eher auch zusätzlich einer physikalischen Stabilisierung. Je nach Feststoffgehalt der Polyole können diese z.B. alleine oder z.B. in Abmischung mit den oben genannten ungefüllten Polyolen eingesetzt werden.

Eine weitere Klasse von einsetzbaren Polyolen sind solche, die als Prepolymere durch Umsetzung von Polyol mit Isocyanat in einem Molverhältnis von 100 zu 1 bis 5 zu 1, bevorzugt 50 zu 1 bis 10 zu 1, erhalten werden. Solche Prepolymere werden vorzugsweise gelöst in Polymer angesetzt, wobei das Polyol bevorzugt dem zur Herstellung der Prepolymeren eingesetzten Polyol entspricht.

Eine weitere Klasse von einsetzbaren Polyolen stellen die sogenannten autokatalytischen Polyole, insbesondere autokatalytische Polyetherpolyole, dar. Solche Polyole basieren zum Beispiel auf Polyether-Blöcken, vorzugsweise auf Ethylenoxid- und/oder Propylenoxid-Blöcken, und beinhalten zudem katalytisch aktive funktionelle Gruppen, wie zum Beispiel stickstoffhaltige funktionelle Gruppen, insbesondere Amino-Gruppen, vorzugsweise tertiäre Amin-Funktionen, Harnstoff-Gruppen und/oder Heterocyclen enthaltend Stickstoff-Atome. Durch die Verwendung solcher autokatalytsichen Polyole bei der Herstellung von Polyurethansystemen, insbesondere von Polyurethanschaumstoffen, bevorzugt von Polyurethanweichschaumstoffen, kann die benötigte Menge an ggf. zusätzlich verwendeten Katalysatoren je nach Anwendung gegebenfalls reduziert und/oder auf spezielle gewünschte Schaumeigenschaften angepasst werden. Geeignete Polyole sind zum Beispiel in WO 0158976 (A1), WO 2005063841 (A1), WO 0222702 (A1), WO 2006055396 (A1), WO 03029320 (A1), WO 0158976 (A1), US 6924321 (B2), US 6762274 (B2), EP 2104696 (B1), WO 2004060956 (A1) oder WO 2013102053 (A1) beschrieben und können zum Beispiel unter den Handelsnamen Voractiv^{™} und/oder SpecFlex^{™} Activ bei der Firma Dow bezogen werden.

Je nach den geforderten Eigenschaften der resultierenden Schäume können entsprechende Polyole verwendet werden, wie sie beispielsweise beschrieben werden in: US 2007/0072951 A1, WO 2007/111828, US 2007/0238800, US 6359022 oder WO 96/12759. Weitere Polyole sind dem Fachmann bekannt und können zum Beispiel der EP-A-0380993 oder US-A-3346557 entnommen werden.

Gemäß einer bevorzugten Ausführungsform der Erfindung, insbesondere zur Herstellung von Form- und hochelastischen Weichschaumstoffen, werden zwei- und/oder dreifunktionelle Polyetheralkohole eingesetzt, die primäre Hydroxylgruppen, bevorzugt über 50 %, besonders bevorzugt über 80 %, aufweisen, insbesondere solche mit einem Ethylenoxidblock am Kettenende. Je nach den geforderten Eigenschaften dieser erfindungsgemäß bevorzugten Ausführungsform, insbesondere zur Herstellung der oben genannten Schaumstoffe, werden neben den hier beschriebenen Polyetheralkoholen vorzugsweise weitere Polyetheralkohole eingesetzt, die primäre Hydroxylgruppen tragen und überwiegend auf Ethylenoxid basieren, insbesondere mit einem Anteil an Ethylenoxidblöcken von > 70 %, bevorzugt > 90 %. Alle im Sinne dieser bevorzugten Ausführungsform beschriebenen Polyetheralkohole besitzen vorzugsweise eine Funktionalität von 2 bis 8, besonders bevorzugt 2 bis 5, zahlengemittelte Molekulargewichte im Bereich von 2500 bis 15000, bevorzugt 4500 bis 12000 und üblicherweise OH-Zahlen im Bereich von 5 bis 80, vorzugsweise 20 bis 50 mg KOH/g.

Gemäß einer weiteren bevorzugten Ausführungsform der Erfindung, insbesondere zur Herstellung von Blockweichschaumstoffen, werden zwei- und/oder dreifunktionelle Polyetheralkohole eingesetzt, die sekundäre Hydroxylgruppen, bevorzugt über 50 %, besonders bevorzugt über 90 %, aufweisen, insbesondere solche mit einem Propylenoxidblock oder statistischen Propylen- und Ethylenoxidblock am Kettenende oder solche, die nur auf Propylenoxidblöcken basieren. Solche Polyetheralkohole besitzen vorzugsweise eine Funktionalität von 2 bis 8, besonders bevorzugt 2 bis 4, zahlengemittelte Molekulargewichte im Bereich von 500 bis 8000, vorzugsweise 800 bis 5000, besonders bevorzugt 2500 bis 4500 und üblicherweise OH-Zahlen im Bereich von 10 bis 100, vorzugsweise 20 bis 60 mg KOH/g.

Gemäß einer weiteren bevorzugten Ausführungsform der Erfindung, insbesondere zur Herstellung von Polyurethanschaumstoffen, vorzugsweise von Polyurethanweichschaumstoffen, bevorzugt zur Herstellung von Form- und hochelastischen Weichschaumstoffen, werden autokatalytische Polyole, wie oben beschrieben, eingesetzt.

Gemäß einer weiteren bevorzugten Ausführungsform der Erfindung, insbesondere zur Herstellung von Polyurethan-Polyesterweichschaumstoffen, werden Polyesteralkohole auf Basis von Diolen und/oder Triolen, bevorzugt Glycerin und/oder Trimethylolpropan, und aliphatischen Carbonsäuren, bevorzugt Adipinsäure, Korksäure, Azelainsäure und/oder Sebacinsäure, eingesetzt. Solche Polyesteralkohole besitzen vorzugsweise eine Funktionalität von 2 bis 4, besonders bevorzugt 2 bis 3, zahlengemittelte Molekulargewichte im Bereich von 200 - 4000, vorzugsweise 400 - 3000, besonders bevorzugt 600 - 2500 und üblicherweise OH-Zahlen im Bereich von 10 - 1000, vorzugsweise 20 - 500, besonders bevorzugt 30 - 300 mg KOH/g.

Gemäß einer weiteren bevorzugten Ausführungsform der Erfindung, insbesondere zur Herstellung von Polyisocyanurat (PIR)-Hartschaumstoffen, werden Polyesteralkohole auf Basis von Diolen und/oder Triolen, bevorzugt Monoethylenglycol, und aromatischen Carbonsäuren, bevorzugt Phthalsäure und/oder Terephthalsäure, eingesetzt. Solche Polyesteralkohole besitzen vorzugsweise eine Funktionalität von 2 bis 4, besonders bevorzugt 2 bis 3, zahlengemittelte Molekulargewichte im Bereich von 200 - 1500, vorzugsweise 300 - 1200, besonders bevorzugt 400 - 1000 und üblicherweise OH-Zahlen im Bereich von 100 - 500, vorzugsweise 150 - 300, besonders bevorzugt 180 - 250 mg KOH/g.

Gemäß einer weiteren bevorzugten Ausführungsform der Erfindung, insbesondere zur Herstellung von Polyurethan-Hartschaumstoffen, werden zwei- bis acht-funktionelle Polyetheralkohole eingesetzt, die sekundäre Hydroxylgruppen, bevorzugt über 50 %, besonders bevorzugt über 90 %, aufweisen, insbesondere solche mit einem Propylenoxidblock oder statistischen Propylen- und Ethylenoxidblock am Kettenende oder solche, die nur auf Propylenoxidblöcken basieren. Solche Polyetheralkohole besitzen vorzugsweise eine Funktionalität von 2 bis 8, besonders bevorzugt 3 bis 8, zahlengemittelte Molekulargewichte im Bereich von 500 bis 2000, vorzugsweise 800 bis 1200 und üblicherweise OH-Zahlen im Bereich von 100 bis 1200, bevorzugt 120 bis 700, besonders bevorzugt 200 bis 600 mg KOH/g. Je nach den geforderten Eigenschaften dieser erfindungsgemäß bevorzugten Schaumstoffe werden neben den hier beschriebenen Polyolen zusätzlich Polyetheralkohole, wie oben beschrieben mit größeren zahlengemittelten Molgewichten und niedrigeren OH-Zahlen, und/oder zusätzliche Polyesterpolyole, wie oben beschrieben basierend auf aromatischen Carbonsäuren, eingesetzt.

Gemäß einer weiteren bevorzugten Ausführungsform der Erfindung, insbesondere zur Herstellung von viskoelastischen Polyurethan-Schaumstoffen, werden vorzugsweise Gemische verschiedener, bevorzugt zweier oder dreier, mehrfunktioneller Polyesteralkohole und/oder Polyetheralkohole eingesetzt. Üblicherweise bestehen hier die eingesetzten Polyol-Kombinationen aus einem niedermolekularen "Crosslinker"-Polyol, beispielweise einem Hartschaum-Polyol, mit hoher Funktionalität (> 3) und/oder einem konventionellen hochmolekularen Blockweichschaum- oder HR-Polyol und/oder einem "Hypersoft"-Polyetherpolyol mit hohem Anteil an Ethylenoxidblöcken und mit zellöffnenden Eigenschaften.

Ein bevorzugtes Verhältnis von Isocyanat und Polyol, ausgedrückt als Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt im Bereich von 10 bis 1000, bevorzugt 40 bis 350, besonders bevorzugt 70 bis 140. Ein Index von 100 steht für ein molares Verhältnis der reaktiven Gruppen von 1 zu 1. Sind neben dem Polyol in der Reaktionsmischung Verbindungen enthalten, die weitere gegenüber Isocyanaten reaktive Gruppen enthalten, so zum Beispiel Wasser vorzugsweise zur Herstellung von Polyurethanschaumstoffen, so gelten für die resultierenden Formulierungen ebenfalls die oben beschriebenen bevorzugten Index-Bereiche.

Je nach Anwendung kann es erfindungsgemäß bevorzugt sein, dass neben den erfindungsgemäßen Mischungen (M) zusätzliche Katalysatoren eingesetzt werden und zwar einzeln während der Verschäumung oder als mit den erfindungsgemäßen Mischungen (M) vorgemischte Katalysator-kombination.

Der Ausdruck "zusätzliche Katalysatoren" umfasst im Sinne dieser Erfindung insbesondere den Einsatz von Verbindungen, die nicht in den erfindungsgemäßen Mischungen (M) enthalten sind und gleichzeitig in der Lage sind Isocyanat-Reaktionen, insbesondere die im Folgenden genannten Reaktionen, zu katalysieren und/oder bei der Herstellung von Polyisocyanat-Reaktionsprodukten, insbesondere bei der Herstellung von Polyurethansystemen, besonders bevorzugt bei der Herstellung von Polyurethan-schaumstoffen als Katalysatoren, Co-Katalysatoren oder Aktivatoren eingesetzt werden.

Der Ausdruck "vorgemischte Katalysatorkombination", im Folgenden auch als Katalysatorkombination bezeichnet, umfasst im Sinne dieser Erfindung insbesondere fertige Zusammensetzungen von erfindungsgemäßen Mischungen (M) mit zusätzlichen Katalysatoren, sowie optional noch weiterer Inhalts- oder Zusatzstoffe wie zum Beispiel Säuren zur Blockierung der Amine, Emulgatoren, Treibmittel, Antioxidantien, Flammschutzmittel, Stabilisatoren und/oder Siloxane, vorzugsweise Polyethersiloxane, sowie weiteren Zusatzstoffen, insbesondere Tenside Biozide, Farbstoffe, Pigmente, Füllstoffe, Antistatik-Additive, Vernetzer, Verdicker, Kettenverlängerer, Zellöffner, und/oder Duftstoffe, die bereits vor der Verschäumung als solche vorliegen und während der Verschäumungsvorgangs nicht als Einzelkomponenten zugegeben werden müssen.

Im Sinne dieser Erfindung wird unterschieden zwischen "weitere stickstoffhaltige Verbindungen" (außer N,N-Dimethylaminopropylamin), die Bestandteil der Mischung (M) im Sinne der Komponente (c) sein können, und "zusätzliche Amin-Katalysatoren", die bei der Verschäumung zugesetzt werden können, also zum Beispiel bei Vordosierung aller Komponenten im Mischkopf, verwendet werden können.

Die o.g. "vorgemischte Katalysatorkombination" wird noch vor dem Mischkopf zusammengemischt, also beispielsweise vom Verschäumer im Fass oder sie kann als fertiges Produkt bereitgestellt werden. Diese "vorgemischte Katalysatorkombination" ist demnach eine weitere Abmischung der Mischung (M), insbesondere mit weiteren Zusatzstoffen, exemplarisch im Folgenden beschrieben.

So kann, wie nachfolgend beschrieben, in einer vorgemischten Katalysatorkombination z.B. ein Metallkatalysator enthalten sein, usw.

Als zusätzliche Katalysatoren können im Rahmen dieser Erfindung zum Beispiel jegliche Katalysatoren für die Reaktionen Isocyanat-Polyol (Urethan-Bildung) und/oder Isocyanat-Wasser (Amin- und Kohlenstoffdioxid-Bildung) und/oder die Isocyanat-Dimerisierung (Uretdion-Bildung) IsocyanatTrimerisierung (Isocyanurat-Bildung), Isocyanat-Isocyanat mit CO₂-Abspaltung (Carbodiimid-Bildung) und/oder Isocyanat-Amin (Harnstoff-Bildung) und/oder "sekundäre" Vernetzungsreaktionen wie Isocyanat-Urethan (Allophanat-Bildung) und/oder Isocyanat-Harnstoff (Biuret-Bildung) und/oder Isocyanat-Carbodiimid (Uretimid-Bildung) eingesetzt werden.

Geeignete zusätzliche Katalysatoren im Sinne der vorliegenden Erfindung sind beispielsweise Substanzen, die eine der vorgenannten Umsetzungen, insbesondere die Gelreaktion (Isocyanat-Polyol), die Treibreaktion (Isocyanat-Wasser) und/oder die Di- bzw. Trimerisierung des Isocyanats katalysieren. Solche Katalysatoren sind vorzugsweise Amine, insbesondere tertiäre Amine und Ammonium-Salze, und/oder metallhaltige Verbindungen.

Geeignete "zusätzliche Amin-Katalysatoren" als zusätzliche Katalysatoren im Sinne der vorliegenden Erfindung sind alle stickstoffhaltigen Verbindungen nach dem Stand der Technik, die nicht in der jeweiligen erfindungsgemäßen Mischung (M) enthalten sind und die eine der oben genannten Isocyanat-Reaktionen katalysieren und/oder zur Herstellung von Polyurethanen, insbesondere von Polyurethanschaumstoffen eingesetzt werden können.

Der Ausdruck "zusätzliche Amin-Katalysatoren" umfasst im Sinne dieser Erfindung auch jeweils die entsprechenden protonierten und/oder quaternisierten Verbindungen sowie Mischungen dieser Verbindungen.

Beispiele für geeignete zusätzliche Amin-Katalysatoren im Sinne der vorliegenden Erfindung sind beispielsweise die Amine Triethylamin, N,N-Dimethylcyclohexylamin, N,N-Dicyclohexylmethylamin, N,N-Dimethylaminoethylamin, N,N,N`,N`-Tetramethylethylen-1,2-diamin, N,N,N',N'-Tetramethylpropylen-1,3-diamin, N,N,N',N'-Tetramethyl-1,4-butandiamin, 1-(2-Aminoethyl)pyrrolidin, N,N`-Dimethylpiperazin, 1,2-Dimethylimidazol, N-(2-Hydroxypropyl)imidazol, 1-Isobutyl-2-methylimidazol, N-(3-Aminopropyl)imidazol, N-Methylimidazol, N-Ethylmorpholin, N-Methylmorpholin, N-(2-Aminoethyl)morpholin, N-(2-Hydroxyethyl)morpholin, 2,2'-Dimorpholinodiethylether, N,N`-Dimethylpiperazin, N-(2-Hydroxyethyl)piperazin, N-(2-Aminoethyl)piperazin, N,N-Dimethylbenzylamin, 3-Dimethylamino-1-propanol, 1-(3-Hydroxypropyl)¬pyrrolidin, Tris(dimethylaminopropyl)hexahydro-1,3,5-triazin, 1,8-Diazabicyclo[5.4.0]undec-7-en, 1,5-Diazabicyclo[4.3.0]non-5-en, N-Methyl-1,5,7-triazabicyclo[4.4.0]dec-5-en, 1,4,6-triazabicyclo[3.3.0]oct-4-en, tert-Butyl-1,1,3,3-Tetramethylguanidin, Guanidin, Bis-N,N-(dimethylaminoethoxyethyl)isophorondicarbamat, 3-Dimethylamino-N,N-dimethylpropionamid und 2,4,6-Tris-(dimethylaminomethyl)phenol. Geeignete zusätzliche Amin-Katalysatoren, nach dem Stand der Technik, können zum Beispiel von der Firma Evonik unter dem Handelsnamen TEGOAMIN^{®} bezogen werden.

Geeignete metallhaltige Verbindungen als zusätzliche Katalysatoren im Sinne der vorliegenden Erfindung sind alle metallhaltigen Verbindungen nach dem Stand der Technik, die eine der oben genannten Isocyanat-Reaktionen katalysieren und/oder zur Herstellung von Polyurethanen, insbesondere von Polyurethanschaumstoffen neben den erfindungsgemäßen Mischungen (M) eingesetzt werden können. Sie können zum Beispiel ausgewählt werden aus der Gruppe der metallorganischen oder organometallischen Verbindungen, metallorganischen oder organometallischen Salze, organischen Metallsalze, anorganischen Metallsalze sowie aus der Gruppe der geladenen oder ungeladenen metallhaltigen Koordinationsverbindungen, insbesondere der Metall-Chelat-Komplexe.

Der Ausdruck "metallorganische oder organometallische Verbindungen" umfasst im Sinne dieser Erfindung insbesondere den Einsatz metallhaltiger Verbindungen, die über eine direkte Kohlenstoff-Metall-Bindung verfügen, hier auch als Metallorganyle (z.B. Zinnorganyle) oder organometallische bzw. Organometall-Verbindungen (z.B. Organozinn-Verbindungen) bezeichnet. Der Ausdruck "organometallische oder metallorganische Salze" umfasst im Sinne dieser Erfindung insbesondere den Einsatz von metallorganischen oder organometallischen Verbindungen mit Salzcharakter, das heißt lonenverbindungen, bei denen entweder das Anion oder Kation von metallorganischer Natur ist (z.B. Organozinn-Oxide, Organozinn-Chloride oder Organozinn-Carboxylate). Der Ausdruck "organische Metallsalze" umfasst im Sinne dieser Erfindung insbesondere den Einsatz von metallhaltigen Verbindungen, die über keine direkte Kohlenstoff-Metall-Bindung verfügen und gleichzeitig Metallsalze sind, bei denen entweder das Anion oder das Kation eine organische Verbindung ist (z.B. Zinn(II)-Carboxylate). Der Ausdruck "anorganische Metallsalze" umfasst im Sinne dieser Erfindung insbesondere den Einsatz von metallhaltigen Verbindungen oder von Metallsalzen, bei denen weder Anion noch Kation eine organische Verbindung ist, z.B. Metall-Chloride (z.B. Zinn(II)-Chlorid), reine oder gemischte, also mehrere Metalle enthaltende, Metall-Oxide (z.B. Zinn-Oxide) und/oder Metall-Silicate oder -Alumosilicate. Der Ausdruck "Koordinationsverbindung" umfasst im Sinne dieser Erfindung insbesondere den Einsatz von metallhaltigen Verbindungen, die aus einem oder mehreren Zentralteilchen und einem oder mehreren Liganden aufgebaut sind, wobei die Zentralteilchen geladene oder ungeladene Metalle sind (z.B. Metall- bzw. Zinn-Amin-Komplexe). Der Ausdruck "Metall-Chelat-Komplexe" umfasst im Sinne dieser Erfindung insbesondere den Einsatz von metallhaltigen Koordinationsverbindungen, die Liganden mit mindestens zwei Koordinations- oder Bindungsstellen zum Metallzentrum aufweisen (z.B. Metall- bzw. Zinn-Polyamin- oder Metall- bzw. Zinn-Polyether-Komplexe).

Geeignete metallhaltige Verbindungen, insbesondere wie oben definiert, als zusätzliche Katalysatoren im Sinne der vorliegenden Erfindung können zum Beispiel ausgewählt werden aus allen metallhaltigen Verbindungen enthaltend Lithium, Natrium, Kalium, Magnesium, Calcium, Scandium, Yttrium, Titan, Zirconium, Vanadium, Niob, Chrom, Molybdän, Wolfram, Mangan, Cobalt, Nickel, Kupfer, Zink, Quecksilber, Aluminium, Gallium, Indium, Germanium, Zinn, Blei, und/oder Bismuth, insbesondere Natrium, Kalium, Magnesium, Calcium, Titan, Zirconium, Molybdän, Wolfram, Zink, Aluminium, Zinn und/oder Bismuth, besonders bevorzugt Zinn, Bismuth, Zink und/oder Kalium.

Geeignete anorganische Metallsalze, insbesondere wie oben definiert, als zusätzliche Katalysatoren im Sinne der vorliegenden Erfindung können zum Beispiel ausgewählt werden aus der Gruppe der Salze von anorganischen Säuren wie zum Beispiel Salzsäure, Kohlensäure, Schwefelsäure, Salpetersäure und Phosphorsäure und/oder von weiteren halogenhaltigen Säuren. Die resultierenden anorganische MetallSalze, beispielsweise Metall-Chloride, Metall-Sulfate, Metall-Phosphate, bevorzugt Metall-Chloride wie Zinn(II)-Chlorid, können bei der Herstellung von Polyurethansystemen, insbesondere von Polyurethanschaumstoffen, in der Regel nur in Kombination mit anderen metallorganischen Salzen, organischen Metallsalzen oder stickstoffhaltigen Katalysatoren und nicht als einzige Katalysatoren, in reiner Form oder abgemischt in einem Lösungsmittel, eingesetzt werden.

Geeignete geladenene oder ungeladenene metallhaltige Koordinationsverbindungen, insbesondere der Metall-Chelat-Komplexe, insbesondere wie oben definiert, als zusätzliche Katalysatoren im Sinne der vorliegenden Erfindung, können zum Beispiel ausgewählt werden aus der Gruppe der ein- oder mehrkernigen Metall-Amin-, Metall-Polyamin, Metall-Polyether-, Metall-Polyester- und/oder Metall-Polyamin-Polyether-Komplexe. Solche Komplexe können entweder in situ während der Verschäumung und/oder der Verschäumung vorgelagert gebildet werden, oder als isolierte Komplexe, in reiner Form oder abgemischt in einem Lösungsmittel, eingesetzt werden. Als geeignete Komplexbildner, Liganden und/oder Chelat-Liganden kommen beispielsweise Acetylaceton, Benzoylaceton, Trifluoracetylaceton, Ethylacetoacetat, Salicylaldehyd, Salicyladehydimin und andere Schiff-Basen, Cyclopentanon-2-Carboxylat, Pyrrolidone wie zum Beispiel N-Methyl-2-pyrrollidon, N-Ethyl-2-pyrrolidon und Polyvinylpyrrolidone (verschiedener Molgewichtsverteilungen), Polyether verschiedener Molgewichte, cyclische Polyether wie zum Beispiel Kronenether und Diamine und Polyamine enthaltend primäre, sekundäre und/oder tertiäre Amine in Betracht.

Geeignete metallhaltige Koordinationsverbindungen sind zum Beispiel alle Metall-Acetylacetonate wie Nickel(II)-acetylacetonat, Zink(II)-acetylacetonat, Kupfer(II)-acetylacetonat, Molybdändioxoacetylacetonat, alle Eisen-acetylacetonate, alle Cobalt-acetylacetonate, alle Zirconium-acetylacetonate, alle Titan-acetylacetonate, alle Bismuth-acetylacetonate und alle Zinn-acetylacetonate.

Geeignete metallorganischen Salze und organischen Metallsalze, insbesondere wie oben definiert, als zusätzliche Katalysatoren im Sinne der vorliegenden Erfindung können zum Beispiel ausgewählt werden aus der Gruppe der Salze von organischen Säuren.

Der Ausdruck "organische Säuren" umfasst im Sinne dieser Erfindung alle organisch chemischen, also Kohlenstoff enthaltenden, Verbindungen, die über eine funktionelle Gruppe verfügen, die mit Wasser und anderen protonierbaren Lösungsmitteln eine Gleichgewichtsreaktion im Sinne einer Säure-Base-Reaktion eingehen kann.

Geeignete organische Säuren können zum Beispiel ausgewählt sein aus der Gruppe von Carbonsäuren, d.h. organischen Verbindungen, die eine oder mehrere Carboxygruppen (*-COOH) tragen, so genannte Carboxylate, und/oder von Alkoholen, d.h. organische Verbindungen eine oder mehrere Hydroxygruppen (*-OH) tragen, so genannte Alkoholate, und/oder von Thiolen, d.h. organische Verbindungen, die eine oder mehrere Thiolgruppen (*-SH, bei Molekülen mit funktionellen Gruppe höherer Priorität auch als Mercapto-Gruppen bezeichnete) tragen, so genannte Thiolate (oder Mercaptide), und/oder von Mercaptoessigsäure-Estern als Spezialfall der Thiole, d.h. organische Verbindungen, die eine oder mehrere Mercaptoessigsäure-Ester-Gruppen tragen (*-O-CO-CH₂-CH₂-SH) tragen, so genannte Mercaptoacetate, und/oder von Schwefelsäureestern, d.h. organische Verbindungen, die eine oder mehrere Sulfat-Gruppen (*-O-SO₃H) tragen, so genannte Sulfate, und/oder von Sulfonsäuren, d.h. organische Verbindungen, die eine oder mehrere Sulfonsäure-Gruppen (*-SO₂-OH) tragen, so genannte Sulfonate, und/oder von Phoshporsäureestern (Alkylphosphate), d.h. organische Verbindungen, die ein- oder zweiwertige Alkyl-Ester der Orthophosphorsäure darstellen (*-O-PO(OH)₂ oder *-O-PO(OR)OH), so genannte Phosphate, und/oder von Phosphonsäuren, d.h. organische Verbindungen, die eine oder mehrere PhosphonsäureGruppen (*-PO(OH)₂) tragen, so genannte Phosphonate, und/oder Phosphorigsäureester, organische Verbindungen, die Alkyl-Ester der Phosphonsäure darstellen (*-P(OR)₂(OH) oder *-P(OR)(OH)₂), so genannte Phosphite.

Geeignete Carbonsäuren im Sinne der vorliegenden Erfindung sind beispielsweise alle linearen, verzweigten oder cyclischen, aliphatischen oder aromatischen, gesättigten oder ungesättigten, gegebenenfalls mit einem oder mehreren Heteroatomen, vorzugsweise mit Hydroxygruppen (*-OH), primären, sekundären oder tertiären Aminogruppen (*-NH₂, *-NHR, *-NR₂) oder Mercapto-Gruppen (*-SH), substituierten, oder durch ein oder mehrere Heteroatome unterbrochenen Mono-, Di- oder PolyCarbonsäuren. Besonders geeignet im Sinne der vorliegenden Erfindung sind Carbonsäuren, an deren Carbobnyl-Kohlenstoffatom ein Wasserstoffatom oder ein linearer, verzweigter oder cyclischer, aliphatischer gesättigter oder ungesättigter, gegebenenfalls mit einem oder mehreren Heteroatomen, vorzugsweise mit Hydroxygruppen (*-OH), primären, sekundären oder tertiären Aminogruppen (*-NH₂, *-NHR, *-NR₂) oder Mercapto-Gruppen (*-SH), substituierter, oder durch ein oder mehrere Heteroatome unterbrochener Kohlenwasserstoffrest gebunden ist. Besonders geeignet im Sinne der vorliegenden Erfindung sind solche aliphatischen Carbonsäuren, die in 2-Position, also am Kohlenstoffatom neben der Carbonylfunktion, disubstituierte (tertiäre) oder trisubstituierte (quarternäre) Kohlenstoffe, bzw. entsprechende Kohlenwasserstoffreste, besitzen. Bevorzugt im Sinne der vorliegenden Erfindung sind solche aliphatischen Carbonsäuren, die in 2-Position eine oder zwei Methyl-, Ethyl, n-Propyl-, iso-Propyl, n-Butyl und/oder iso-Butyl-Verzweigung(en) aufweisen. Besonders bevorzugt im Sinne der vorliegenden Erfindung sind solche aliphatischen Carbonsäuren, insbesondere Monocarbonsäuren, die neben der beschriebenen Verzweigung in 2-Position eine gesättigte oder ungesättigte, lineare oder verzweigte Alkylkette aufweisen und optional mit einem oder mehreren Heteroatomen, vorzugsweise mit Hydroxygruppen (*-OH), primären, sekundären oder tertiären Aminogruppen (*-NH₂, *-NHR, *-NR₂) oder Mercapto-Gruppen (*-SH), substituiert sind. Insbesondere können geeignete Carbonsäuren ausgewählt werden aus der Gruppe der Neosäuren bzw. Koch-Säuren.

Beispiele für geeignete ein-, zwei- und mehrwertige, gesättigte und ungesättigte substituierte und nicht substituierte Carbonsäuren, Fettsäuren und Neosäuren bzw. Koch-Säuren, sind Carbonsäuren wie Ameisensäure, Essigsäure, Propionsäure, Propionsäuren, Acrylsäure, Buttersäure, Isobuttersäure, 2,2-Dimethylbuttersäure, Valeriansäure, Isovaleriansäure, 2-Methylvaleriansäure, 2,2-Dimethylvaleriansäure (iso-Heptansäure), Pivalinsäure, Capronsäure, 2-Ethylhexansäure (iso-Oktansäure), Önansäure, Caprylsäure, Pelargonsäure, iso-Nonansäure, 3,5,5-Trimethylhexansäure, 2,5,5-Trimethylhexansäure, 4,5,5-Trimethylhexansäure, 2,2,4,4-Tetramethylpentansäure, 6,6-Dimethylheptansäure, Caprinsäure, Neodecansäure, 7,7-Dimethyloctansäure, 2,2-Dimethyloctansäure, 2,4-Dimethyl-2-isopropylpentansäure, 2,2,3,5-Tetramethylhexansäure, 2,2-Diethylhexansäure, 2,5-Dimethyl-2-ethylhexansäure, Undecansäure, Laurinsäure, Tridecansäure, Neotridecansäure, Myristinsäure, Pentadecansäure, Palmitinsäure, Margarinsäure, Stearinsäure, Ölsäure, Linolsäure, Alpha-Linolensäure Phytansäure, Icosensäure, Erucasäure, Rizinolsäure, Vernolsäure, Arachinsäure, Arachidonsäure, Oxalsäure, Glycolsäure, Glyoxalsäure, Malonsäure, Milchsäure, Zitronensäure, Bernsteinsäure, Fumarsäure, Maleinsäure, Äpfelsäure, Weinsäure, Glutarsäure, Adipinsäure, Sorbinsäure, Zimtsäure, Salicylsäure, Benzoesäure, Terephthalsäure, Phthalsäure, iso-Phthalsäure, Nicotinsäure, Carbaminsäure, Pyrrolidin-2-Carbonsäure und Cyclohexancarbonsäure.

Geeignete Alkohole sind alle linearen, verzweigten oder cyclischen, aliphatischen oder aromatischen, gesättigten oder ungesättigten, gegebenenfalls mit einem oder mehreren Heteroatomen, vorzugsweise mit primären, sekundären oder tertiären Amino-Gruppen (*-NH₂, *-NHR, *-NR₂) oder Mercapto-Gruppen (*-SH), substituierte, oder durch ein oder mehrere Heteroatome unterbrochene einwertige Alkohole, zweiwertige Alkohole (Diole) und/oder mehrwertige Alkohole (Polyole). Geeignet hierfür sind zum Beispiel Methanol, Ethanol, Propanol, iso-Propanol, Butanol, tert-Butanol, Neopentylalkohol, Phenole und/oder Nonylphenol.

Geeignete Thiole, Mercaptoessigsäure-Ester, Schwefelsäureester, Sulfonsäuren, Phoshporsäureester (Alkylphosphate), Phosphonsäuren und/oder Posphorigsäureester sind beispielsweise alle linearen, verzweigten oder cyclischen, aliphatischen oder aromatischen, gesättigten oder ungesättigten, gegebenenfalls mit einem oder mehreren Heteroatomen substituierte, oder durch ein oder mehrere Heteroatome unterbrochene organische Verbindungen, enthaltend eine oder mehrere entsprechende funktionelle Gruppen, wie oben definiert. Geeignete hierfür sind zum Beispiel Dialkylphosphite, Methansulfonsäure, Trifluormethansulfonsäure, p-Toluolsulfonsäure, Dodecylbenzylsulfonsäure, Taurin, Isooctylmercaptoacetat, 2-Ethylhexylmercaptoacetat, Ethantiol und/oder n-Laurylmercaptid.

Besonders geeignete metallorganische Salze und organische Metallsalze, wie oben definiert, als zusätzliche Katalysatoren im Sinne der vorliegenden Erfindung sind zum Beispiel Organozinn-, Zinn-, Zink-, Bismuth und Kalium-Salze, insbesondere entsprechende Metall-Carboxylate, -Alkoholate, -Thiolate und - Mercaptoacetate, wie zum Beispiel Dibutylzinndiacetat, Dimethylzinndilaurat, Dibutylzinndilaurat (DBTDL), Dioctylzinndilaurat (DOTDL), Dimethylzinndineodecanoat, Dibutylzinndineodecanoat, Dioctylzinndineodecanoat, Dibutylzinndioleat, Dibutylzinn-bis-n-laurylmercaptid, Dimethylzinn-bis-n-laurylmercaptid, Mono-methylzinn-tris-2-ethylhexylmercaptoacetat, Dimethylzinn-bis-2-ethylhexylmercaptoacetat, Dibutylzinn-bis-2-ethylhexylmercaptoacetat, Dioctylzinn-bis-isooctylmercaptoacetat, Zinn(II)-acetat, Zinn(II)-2-ethylhexanoat (Zinn(II)-octoat), Zinn(II)-isononanoat (Zinn(II)-3,5,5-trimethylhexanoat), Zinn(II)-neodecanoat, Zinn(II)-ricinoleat, Zink(II)-acetat, Zink(II)-2-ethylhexanoat (Zink(II)-octoat), Zink(II)-isononanoat (Zink(II)-3,5,5-trimethylhexanoat), Zink(II)-neodecanoat, Zink(II)-ricinoleat, Bismuthacetat, Bismuth-2-ethylhexanoat, Bismuthoctoat, Bismuthisononanoat, Bismuthneodecanoat, Kaliumformiat, Kaliumacetat, Kalium-2-ethylhexanoat (Kaliumoctoat), Kalium-isononanoat, Kalium-neodecanoat und/oder Kaliumricinoleat.

Bei der erfindungsgemäßen Herstellung von Polyurethanen, kann es je nach Art der Anwendung, insbesondere bei der Herstellung von Polyurethanschaumstoffen, bevorzugt sein, die Verwendung von metallorganischen Salzen wie zum Beispiel von Dibutylzinndilaurat auszuschließen.

Geeignete zusätzliche metallhaltige Katalysatoren werden in der Regel vorzugsweise so ausgewählt, dass sie keinen störenden Eigengeruch aufweisen, toxikologisch im Wesentlichen unbedenklich sind und dass die resultierenden Polyurethansysteme, insbesondere Polyurethanschäume möglichst geringe Katalysatorbedingte Emissionen aufweisen.

Neben zusätzlichen Amin-Katalysatoren und metallhaltigen Verbindungen als zusätzlichen Katalysatoren können auch Ammoniumsalze als zusätzliche Katalysatoren eingesetzt werden. Geeignet sind zum Beispiel Ammoniumformiat und/oder Ammoniumacetat.

Geeignete zusätzliche Katalysatoren sind beispielsweise in DE 102007046860, EP 1985642, EP 1985644, EP 1977825, US 2008/0234402, EP 0656382 B1 und US 2007/0282026 A1 und den darin zitierten Patentschriften genannt.

Geeignete Einsatzmengen an zusätzlichen Katalysatoren richten sich nach dem Typ des Katalysators und liegen vorzugsweise im Bereich von 0,01 bis 10,0 pphp, besonders bevorzugt im Bereich von 0,02 bis 5,00 pphp (= Gewichtsteile bezogen auf 100 Gewichtsteile Polyol) bzw. 0,10 bis 10,0 pphp für Kaliumsalze.

Gemäß einer bevorzugten Ausführungsform der Erfindung, insbesondere zur Herstellung von Form- und hochelastischen Weichschaumstoffen und/oder zur Herstellung von Polyurethanen, die in der Automobilindustrie eingesetzt werden, kann es bevorzugt sein, dass auf den Einsatz von metallhaltigen Katalysatoren verzichtet wird und dass als Katalysatoren ausschließlich erfindungsgemäße Mischungen (M), optional in Kombination mit zusätzlichen Amin-Katalysatoren, eingesetzt werden.

"Dass auf den Einsatz von metallhaltigen Katalysatoren verzichtet wird" bedeutet, dass bei der betreffenden Herstellung von Polyurethanen ≥ 0,001 Gew.-% bis ≤ 20 Gew.-%, vorzugsweise < 10 Gew.-%, bevorzugt < 5 Gew.-%, besonders bevorzugt < 1 Gew.-% metallhaltige Katalysatoren eingesetzt werden können, insbesondere aber ganz und gar auf den Einsatz metallhaltiger Katalysatoren verzichtet wird.

Sollten neben der erfindungsgemäßen Mischung (M) zusätzliche metallhaltige Katalysatoren, insbesondere Zinn-Katalysatoren eingesetzt werden, was einer anderen bevorzugten Ausführungsform entspricht, kann es je nach Anwendung bevorzugt sein, wenn aus der Summe aller eingesetzten stickstoffhaltigen Verbindungen, also der Summe der stickstoffhaltigen Verbindungen in erfindungsgemäßen Mischungen (M) und der zusätzlichen Amin-Katalysatoren nach dem Stand der Technik, gegenüber der Summe der metallhaltigen Katalysatoren, insbesondere Kalium-, Zink- und/oder Zinn-Katalysatoren, ein molares Mengenverhältnis von 1:0,05 bis 0,05:1, vorzugsweise 1:0,07 bis 0,07:1 und besonders bevorzugt 1:0,1 bis 0,1:1 resultiert.

Um eine Reaktion der Komponenten untereinander zu vermeiden, insbesondere Reaktionen von erfindungsgemäß verwendeten Mischungen (M), sowie optional zusätzlichen Amin-Katalysatoren mit zusätzlichen metallhaltigen Katalysatoren, insbesondere Kalium-, Zink- und/oder Zinn-Katalysatoren, kann es bevorzugt sein, diese Komponenten getrennt voneinander zu lagern und dann der Isocyanat- und Polyol-Reaktionsmischung gleichzeitig oder nacheinander zuzuführen.

Als Zusatzstoffe können alle nach dem Stand der Technik bekannten Substanzen verwendet werden, die bei der Herstellung von Polyurethanen, insbesondere von Polyurethanschaumstoffen, Verwendung finden, wie zum Beispiel Treibmittel, vorzugsweise Wasser zur Bildung von CO₂ und, falls nötig, weitere physikalische Treibmittel, Vernetzer und Kettenverlängerer, Stabilisatoren gegen oxidativen Abbau (so genannte Antioxidantien), Flammschutzmittel, Tenside, Biozide, zellverfeinernde Additive, Zellöffner, feste Füllstoffe, Antistatik-Additive, Nukleierungsmittel, Verdicker, Farbstoffe, Pigmente, Farbpasten, Duftstoffe, Emulgatoren, Puffersubstanzen und/oder zusätzliche katalytisch aktive Substanzen, insbesondere wie oben definiert.

Sollen Polyurethanschäume als Polyurethansysteme hergestellt werden, kann es vorteilhaft sein, Wasser als Treibmittel einzusetzen. Vorzugsweise wird so viel Wasser eingesetzt, dass die Wassermenge 0,10 bis 25,0 pphp beträgt (pphp = Gewichtsteile bezogen auf 100 Gewichtsteile Polyol).

Es können auch geeignete physikalische Treibmittel eingesetzt werden. Dies sind beispielsweise verflüssigtes CO₂, und leichtflüchtige Flüssigkeiten, beispielsweise Kohlenwasserstoffe mit 3, 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Hydrofluoroolefine (HFO) oder Hydrohaloolefine wie z.B. 1234ze, 1233zd(E) oder 1336mzz, Sauerstoff-haltige Verbindungen wie Methylformiat, Aceton und Dimethoxymethan, oder Chlorkohlenwasserstoffe, bevorzugt Dichlormethan und 1,2-Dichlorethan.

Neben Wasser und den physikalischen Treibmitteln, können auch andere chemische Treibmittel eingesetzt werden, die mit Isocyanaten unter Gasentwicklung reagieren, wie beispielsweise Ameisensäure.

Als Vernetzer und Kettenverlängerer werden niedermolekulare, gegenüber Isocyanaten reaktive, mehrfunktionelle Verbindungen bezeichnet. Geeignet sind zum Beispiel Hydroxyl- oder Amin-terminierte Substanzen wie Glycerin, Neopentylglycol, 2-Methyl-1,3-propandiol, Triethanolamin (TEOA), Diethanolamin (DEOA) und Trimethylolpropan. Die Einsatzkonzentration liegt üblicherweise zwischen 0,1 und 5 Teilen, bezogen auf 100 Teile Polyol, kann aber je nach Formulierung auch davon abweichen. Bei der Verwendung von crude MDI bei der Formverschäumung übernimmt dies ebenfalls eine vernetzende Funktion. Der Gehalt an niedermolekularen Vernetzern kann daher bei steigender Menge an crude MDI entsprechend reduziert werden.

Geeignete Stabilisatoren gegen oxidativen Abbau, so genannte Antioxidantien, sind vorzugsweise alle gängigen Radikalfänger, Peroxidfänger, UV-Absorber, Lichtstabilisatoren, Komplexbildner für Metallionenverunreinigungen (Metalldeaktivatoren). Bevorzugt einsetzbar sind Verbindungen folgender Substanzklassen, bzw. Substanzklassen enthaltend folgende funktionelle Gruppen, wobei als Substituenten an den jeweiligen Grundkörpern insbesondere diejenigen bevorzugt sind, die gegenüber Isocyanat reaktive Gruppen besitzen: 2-(2`-Hydroxyphenyl)benzotriazole, 2-Hydroxybenzophenone, Benzoesäuren und Benzoate, Phenole, insbesondere enthaltend tert-Butyl- und oder Methylsubstituenten am Aromaten, Benzofuranone, Diarylamine, Triazine, 2,2,6,6-Tetramethylpiperidine, Hydroxylamine, Alkyl- und Arylphosphite, Sulfide, Zinkcarboxylate, Diketone. Als Phenole können beispielsweise Ester basierend auf 3-(4-Hydroxyphenyl)propionsäure wie Triethyleneglycol-bis-[3-(3-tert-butyl-4-hydroxy-5-methylphenyl)propionat], Octadecyl-3-(3,5-di-tert-butyl-4-hydroxyphenyl)propionat, oder Methylendiphenole wie 4,4'-Butyliden-bis-(6-tert-butyl-3-methylphenol) eingesetzt werden. Als 2-(2`-Hydroxyphenyl)benzotriazole sind beispielsweise 2-(2'Hydroxy-5'-methylphenyl)benzotriazol oder 2-(2'Hydroxy-3',5'-di-tert-butylphenyl)benzotriazol bevorzugt. Als 2-Hydroxybenzophenone sind beispielsweise 2-Hydoxy-4-n-octoxybenzophenon, 2,2',4,4'-tetrahydroxybenzophenon oder 2,4-dihydroxybenzophenon bevorzugt. Als Benzoate sind beispielsweise Hexadecyl-3,5-di-tert-butyl-4-hydroxybenzoat oder Tannine bevorzugt.

Geeignete Flammschutzmittel im Sinne dieser Erfindung sind alle Substanzen, die nach dem Stand der Technik als dafür geeignet betrachten werden. Bevorzugte Flammschutzmittel sind beispielsweise flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet.

Tenside, die insbesondere bei der Herstellung von Polyurethanschaumstoffen eingesetzt werden, können zum Beispiel ausgewählt sein aus der Gruppe umfassend anionische Tenside, kationische Tenside, nichtionische Tenside und/oder amphotere Tenside. Als Tenside können erfindungsgemäß auch polymere Emulgatoren wie Polyalkylpolyoxyalkylpolyacrylate, Polyvinylpyrrolidone oder Polyvinylacetate verwendet werden.

Als Biozide können zum Beispiel handelsübliche Produkte verwendet werden, wie Chlorophen, Benzisothiazolin, Hexahydro-1 ,3,5-tris(hydroxyethyl-s-triazin), Chloromethylisothiazolin, Methylisothiazolin oder 1 ,6-Dihydroxy-2,5-dioxohexan, die unter den Handelsnamen BIT 10, Nipacide BCP, Acticide MBS, Nipacide BK, Nipacide CI, Nipacide FC bekannt sind.

Zur Beeinflussung der Schaumeigenschaften von Polyurethanschäumen können bei deren Herstellung insbesondere Siloxane bzw. organomodifizierte Siloxane eingesetzt werden, wobei die im Stand der Technik genannten Substanzen verwendet werden können. Vorzugsweise werden solche Verbindungen eingesetzt, die für die jeweiligen Schaumtypen (Hartschäume, Heissweichschäume, viskoelastische Schäume, Esterschäume, Kaltweichschäume (HR-Schäume), halbharte Schäume) besonders geeignet sind. Geeignete (organomodifizierte) Siloxane sind beispielsweise in den folgenden Schriften beschrieben: EP 0839852, EP 1544235, DE 102004001408, EP 0839852, WO 2005/118668, US 20070072951, DE 2533074, EP 1537159 EP 533202, US 3933695, EP 0780414, DE 4239054, DE 4229402, EP 867465. Die Herstellung dieser Verbindungen kann wie im Stand der Technik beschrieben erfolgen. Geeignete Beispiele sind z. B. in US 4147847, EP 0493836 und US 4855379 beschrieben.

Als (Schaum-)stabilisatoren können alle aus dem Stand der Technik bekannten Stabilisatoren eingesetzt werden. Bevorzugt werden Schaumstabilisatoren auf der Basis von Polydialkylsiloxan-Polyoxyalkylencopolymeren, wie sie allgemein bei Herstellung von Urethanschaumstoffen verwendet werden, eingesetzt. Diese Verbindungen sind vorzugsweise so aufgebaut, dass z.B. ein langkettiges Copolymerisat aus Ethylen- und Propylenoxid mit einem Polydimethylsiloxanrest verbunden ist. Die Verknüpfung zwischen dem Polydialkylsiloxan und dem Polyetherteil kann dabei über eine SiC-Verknüpfung oder eine Si-O-C-Bindung erfolgen. Strukturell kann der oder können die unterschiedlichen Polyether terminal oder seitenständig an das Polydialkylsiloxan gebunden sein. Der Alkylrest oder die verschiedenen Alkylreste können dabei aliphatisch, cycloaliphatisch oder aromatisch sein. Ganz besonders vorteilhaft sind dabei Methylgruppen. Das Polydialkylsiloxan kann dabei linear sein oder auch Verzweigungen enthalten. Geeignete Stabilisatoren, insbesondere Schaumstabilisatoren sind unter anderem in US 2834748, US 2917480 sowie in US 3629308 beschrieben. Geeignete Stabilisatoren können von der Evonik Industries AG unter dem Handelsnamen TEGOSTAB^{®} bezogen werden.

Geeignete Siloxane, die bei der erfindungsgemäßen Verwendung der erfindungsgemäßen Mischungen (M) bei der Herstellung von Polyurethanschaumstoffen eingesetzt werden können, haben insbesondere die folgende Struktur: 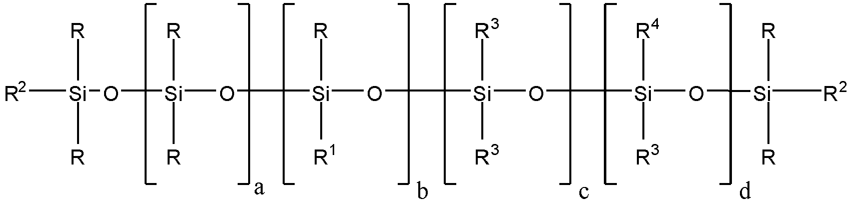 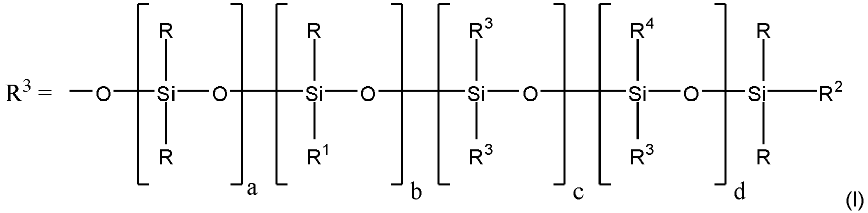 worin
- a: unabhängig voneinander 0 bis 500 ist, vorzugsweise 1 bis 300 und insbesondere 2 bis 150,
- b: unabhängig voneinander 0 bis 60 ist, vorzugsweise 1 bis 50 und insbesondere 1 bis 30,
- c: unabhängig voneinander 0 bis 10, vorzugsweise 0 oder > 0 bis 5, ist,
- d: unabhängig voneinander 0 bis 10, vorzugsweise 0 oder > 0 bis 5, ist,
mit der Maßgabe, dass pro Molekül der Formel (I) die mittlere Anzahl Σd der T-Einheiten [SiR³R⁴O] und die mittlere Anzahl Σc der Q-Einheiten [SiR³R³O] pro Molekül jeweils nicht größer als 50, die mittlere Anzahl Σa der D-Einheiten [SiRRO] pro Molekül nicht größer als 2000 und die mittlere Anzahl Σb der R¹ tragenden Siloxy-Einheiten pro Molekül nicht größer als 100 ist,
- R: unabhängig voneinander mindestens ein Rest aus der Gruppe linearer, cyclischer oder verzweigter, aliphatischer oder aromatischer, gesättigter oder ungesättigter Kohlenwasser-stoffreste mit 1 bis zu 20 C-Atomen, vorzugsweise jedoch ein Methylrest ist,
- R²: unabhängig voneinander R¹ oder R ist,
- R¹: ist ungleich R und unabhängig voneinander ein organischer Rest und/oder ein Polyetherrest, bevorzugt ist der R¹ ein Rest ausgewählt aus der Gruppe

-CH₂-CH₂-CH₂-O-(CH₂-CH₂O-)ₓ-(CH₂-CH(R')O-)_{y}-R"

-CH₂-CH₂-O-(CH₂-CH₂O-)ₓ-(CH₂-CH(R')O-)_{y}-R"

-O-(C₂H₄O-)ₓ-(C₃H₅O-)_{y}-R'

-CH₂-R^{IV}

-CH₂-CH₂-(O)_{x'}-R^{IV}

-CH₂-CH₂-CH₂-O-CH₂-CH(OH)-CH₂OH

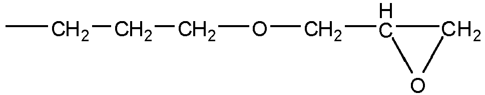

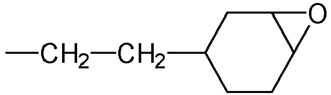

oder

-CH₂-CH₂-CH₂-O-CH₂-C(CH₂OH)₂-CH₂-CH₃ ist,
worin
- x: 0 bis 100, vorzugsweise > 0, insbesondere 1 bis 50,
- x': 0 oder 1,
- y: 0 bis 100, vorzugsweise > 0, insbesondere 1 bis 50,
- z: 0 bis 100, vorzugsweise > 0, insbesondere 1 bis 10,
- R': unabhängig voneinander eine gegebenenfalls substituierte, beispielsweise mit Alkylresten, Arylresten oder Halogenalkyl- oder Halogenarylresten substituierte, Alkyl- oder Arylgruppe mit 1 bis 12 C-Atomen ist, wobei innerhalb eines Restes R¹ und/oder eines Moleküls der Formel (I) untereinander verschiedene Substituenten R' vorliegen können, und
- R": unabhängig voneinander ein Wasserstoffrest oder eine Alkylgruppe mit 1 bis 4 C-Atomen, eine Gruppe -C(O)-R‴ mit R‴ = Alkylrest, eine Gruppe -CH₂-O-R', eine Alkylarylgruppe, wie z. B. eine Benzylgruppe, die Gruppe -C(O)NH-R' bedeutet,
- R^{IV}: ein linearer, cyclischer oder verzweigter, auch weiter substituierter, z. B. mit Halogenen substituierter, Kohlenwasserstoffrest mit 1 bis 50, vorzugsweise 9 bis 45, bevorzugt 13 bis 37 C-Atomen ist,
- R⁴: unabhängig voneinander R, R¹ und/oder ein mit Heteroatomen substituierter, funktionalisierter, organischer, gesättigter oder ungesättigter Rest ausgewählt aus der Gruppe der Alkyl-, Aryl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Rest sein kann,
mit der Maßgabe, dass mindestens ein Substituent aus R¹, R² und R⁴ nicht gleich R ist. Die verschiedenen Monomereinheiten der in den Formeln angegebenen Bausteine (Siloxanketten bzw. Polyoxyalkylenkette) können untereinander blockweise aufgebaut sein mit einer beliebigen Anzahl an Blöcken und einer beliebigen Sequenz oder einer statistischen Verteilung unterliegen. Die in den Formeln verwendeten Indices sind als statistische Mittelwerte zu betrachten.

Die Herstellung der Siloxane nach Formel (I) kann nach den bekannten Methoden erfolgen, wie z.B. die edelmetallkatalysierte Hydro-silylierungsreaktion von Verbindungen, die eine Doppelbindung enthalten, mit entsprechenden Wasserstoffsiloxanen wie beispielsweise in EP 1520870, beschrieben.

Als Verbindungen, die zumindest eine Doppelbindung pro Molekül aufweisen, können z. B. α -Olefine, Vinylpolyoxyalkylene und/oder Allylpolyoxyalkylene eingesetzt werden. Vorzugsweise werden Vinylpolyoxyalkylene und/oder Allylpolyoxyalkylene eingesetzt. Besonders bevorzugte Vinylpolyoxyalkylene sind z. B. Vinylpolyoxyalkylene mit einem Molgewicht im Bereich von 100 g/Mol bis 8.000 g/Mol, die aus den Monomeren Propylenoxid, Ethylenoxid, Butylenoxid und/oder Styroloxid blockweise oder statistisch verteilt aufgebaut sein können und die sowohl hydroxyfunktionell als auch durch eine Methyletherfunktion oder eine Acetoxyfunktion endverkappt sein können. Besonders bevor-zugte Allylpolyoxyalkylene sind z. B. Allylpolyoxyalkylene mit einem Molgewicht im Bereich von 100 g/Mol bis 5.000 g/Mol, die aus den Monomeren Propylenoxid, Ethylenoxid, Butylenoxid und/oder Styroloxid blockweise oder statistisch verteilt aufgebaut sein können und die sowohl hydroxyfunktionell als auch durch eine Methyletherfunktion oder eine Acetoxyfunktion end-verkappt sein können. Besonders bevorzugt werden als Verbindungen, die zumindest eine Doppelbindung pro Molekül aufweisen, die in den Beispielen genannten α -Olefine, Allylalkohol, 1-Hexenol, Vinylpolyoxyalkylene und/oder Allylpolyoxyalkylene sowie Allylglycidylether und Vinylcyclohexenoxid eingesetzt.

Bevorzugt werden im Rahmen der vorliegenden Erfindung (insbesondere im Rahmen der erfindungsgemäßen Verwendung) Siloxane der Formel (I) eingesetzt, worin a unabhängig voneinander 1 bis 300 ist, b unabhängig voneinander 1 bis 50 ist, c unabhängig voneinander 0 bis 4 ist, d unabhängig voneinander 0 bis 4 ist, mit der Maßgabe, dass pro Molekül der Formel (I) die mittlere Anzahl Σd der T-Einheiten und die mittlere Anzahl Σc der Q-Einheiten pro Molekül jeweils nicht größer als 20, die mittlere Anzahl Σa der D-Einheiten pro Molekül nicht größer als 1500 und die mittlere Anzahl Σb der R¹ tragenden Siloxy-Einheiten pro Molekül nicht größer als 50 ist.

In einer besonders bevorzugten Ausführungsform der vorliegenden Erfindung (insbesondere im Rahmen der erfindungsgemäßen Verwendung) werden Siloxane der Formel (I) eingesetzt worin R¹ unabhängig voneinander ein organischer Rest

-CH₂-CH₂-CH₂-O-(CH₂-CH₂O-)ₓ-(CH₂-CH(R')O-)_{y}-R"

-CH₂-CH₂-O-(CH₂-CH₂O-)ₓ-(CH₂-CH(R')O-)_{y}-R"

-CH₂-R^{IV}

ist, worin x 0 bis 100, vorzugsweise > 0, insbesondere 1 bis 50 und y 0 bis 100, vorzugsweise > 0, insbesondere 1 bis 50 ist, R' unabhängig voneinander verschieden sein können und Methyl-, Ethyl- und/oder Phenyl-Reste darstellen. R" unabhängig voneinander ein Wasserstoffrest oder eine Alkylgruppe mit 1 bis 4 C-Atomen, eine Gruppe -C(O)-R‴ mit R‴ = Alkylrest, eine Gruppe -CH₂-O-R', eine Alkylarylgruppe, wie z. B. eine Benzylgruppe, die Gruppe -C(O)NH-R' bedeutet, R^{IV} ein linearer, cyclischer oder verzweigter, gegebenenfalls substituierter, z. B. mit Halogenen substituierter, Kohlenwasserstoffrest mit 1 bis 50, vorzugsweise 9 bis 45, bevorzugt 13 bis 37 C-Atomen ist.

In einer weiteren bevorzugten Ausführungsform der vorliegenden Erfindung (insbesondere im Rahmen der erfindungsgemäßen Verwendung), vorzugsweise zur Herstellung von Hartschaumstoffen, werden Siloxane der Formel (I) eingesetzt, worin R¹ unabhängig voneinander ein organischer Rest ausgewählt aus der Gruppe umfassend -CH₂-CH₂-CH₂-O-(CH₂-CH₂O-)ₓ-(CH₂-CH(R')O-)_{y}-R" und/oder

-CH₂-CH₂-O-(CH₂-CH₂O-)ₓ-(CH₂-CH(R')O-)_{y}-R"

und /oder -CH₂-R^{IV} ist, worin x 0 bis 100, vorzugsweise > 0, insbesondere 1 bis 50, y 0 bis 100, vorzugsweise > 0, insbesondere 1 bis 50, R' Methyl ist und R" unabhängig voneinander ein Wasserstoff-rest oder eine Alkylgruppe mit 1 bis 4 C-Atomen, eine Gruppe C(O)-R‴ mit R‴ = Alkylrest, eine Gruppe -CH2-O-R', eine Alkylarylgruppe, wie z. B. eine Benzylgruppe, die Gruppe C(O)NH-R' bedeutet, wobei der molare Anteil an Oxyethylen-Einheiten bezogen auf die Gesamtmenge Oxyalkyleneinheiten mind. 70% der Oxalkylen-Einheiten ausmacht, also x/(x+y) >0,7 ist. Unter dieser Voraussetzung ist bevorzugt, dass Außerdem die Polyoxyalkylen-Kette am Ende einen Wasserstoff trägt. Unter diesen Vorrausetzungen werden gemäß einer weiteren bevorzugten Ausführungsform der Erfindung (insbesondere im Rahmen der erfindungsgemäßen Verwendung) Siloxane der Formel (I) verwendet in denen die in Rest R¹ enthaltenen Oxalkylen-Einheiten ausschließlich Oxyethylen-Einheiten sind und dabei der Rest R" kein Wasserstoff ist.

In einer weiteren bevorzugten Ausführungsform der vorliegenden Erfindung (insbesondere im Rahmen der erfindungsgemäßen Verwendung), vorzugsweise zur Herstellung von Blockweichschaumstoffen, werden Siloxane der Formel (I) eingesetzt, worin R1 unabhängig voneinander ein organischer Rest ausgewählt aus der Gruppe umfassend -CH₂-CH₂-CH₂-O-(CH₂-CH₂O-)ₓ-(CH₂-CH(R')O-)_{y}-R" und/oder

-CH₂-CH₂-O-(CH₂-CH₂O-)ₓ-(CH₂-CH(R')O-)_{y}-R"

und /oder -CH₂-R^{IV} ist, worin x 0 bis 100, vorzugsweise > 0, insbesondere 1 bis 50, y 0 bis 100, vorzugsweise > 0, insbesondere 1 bis 50, R' Methyl ist und R" unabhängig voneinander ein Wasserstoff-rest oder eine Alkylgruppe mit 1 bis 4 C-Atomen, eine Gruppe C(O)-R‴ mit R‴ = Alkylrest, eine Gruppe -CH2-O-R', eine Alkylarylgruppe, wie z. B. eine Benzylgruppe, die Gruppe C(O)NH-R' bedeutet, wobei der molare Anteil an Oxyethylen-Einheiten bezogen auf die Gesamtmenge Oxyalkyleneinheiten maximal 60% der Oxalkylen-Einheiten ausmacht, also x/(x+y) <0,6 ist.

In einer weiteren bevorzugten Ausführungsform der vorliegenden Erfindung (insbesondere im Rahmen der erfindungsgemäßen Verwendung) werden Siloxane der Formel (I) verwendet in denen bei der Hydrosilylierung unter anderem Olefine eingesetzt werden wodurch R¹ mindestens zu 10 mol%, bevorzugt zu mindestens 20 mol%, besonders bevorzugt zu mindestens 40 mol% aus CH₂-R^{IV} besteht, wobei R^{IV} ein linearer oder verzweigter Kohlen-wasserstoff mit 9 bis 17 Kohlenstoffatomen ist.

In einer weiteren bevorzugten Ausführungsform der vorliegenden Erfindung (insbesondere im Rahmen der erfindungsgemäßen Verwendung) werden Siloxane der Formel (I) verwendet in denen die endständigen, oder auch alpha- und omega- genannten, Positionen am Siloxan mindestens teilweise mit Resten R¹ funktionalisiert sind. Es sind hierbei zumindest 10 mol-%, bevorzugt zumindest 30 mol-%, besonders bevorzugt zumindest 50 mol-% der endständigen Positionen mit Resten R¹ funktionalisiert.

In einer besonders bevorzugten Ausführungsform der Erfindung (insbesondere im Rahmen der erfindungsgemäßen Verwendung) werden Siloxane der Formel (I) verwendet in denen im statistischen Mittel maximal 50%, bevorzugt maximal 45%, besonders bevorzugt maximal 40% des gesamten mittleren Molgewichts des Siloxans auf die aufsummierte Molmasse aller, gegebenenfalls unterschiedlichen, Reste R¹ im Siloxan entfällt.

In einer weiteren bevorzugten Ausführungsform der vorliegenden Erfindung (insbesondere im Rahmen der erfindungsgemäßen Verwendung) werden Siloxane der Formel (I) verwendet in denen der Rest R für Methyl steht und die Anzahl der Strukturelemente mit dem Index a in größerer Anzahl vorliegen als die Strukturelemente mit dem Index b, in der Art, dass der Quotient a/b mindestens gleich sieben, vorzugsweise größer 10, besonders bevorzugt größer 12 ist.

In einer weiteren bevorzugten Ausführungsform der vorliegenden Erfindung (insbesondere im Rahmen der erfindungsgemäßen Verwendung) werden Siloxane der Formel (I) verwendet in denen die in Rest R¹ enthaltenen Oxalkylen-Einheiten ausschließlich Oxyethylen-Einheiten sind und dabei der Rest R" kein Wasserstoff ist.

In einer weiteren bevorzugten Ausführungsform der vorliegenden Erfindung, kann es bei der Herstellung von Polyurethan-Schäumen, insbesondere von Polyurethan-Kaltschäumen bevorzugt sein, dass man als Stabilisatoren Polydimethylsiloxane der nachfolgenden allgemeinen Formel (II) verwendet 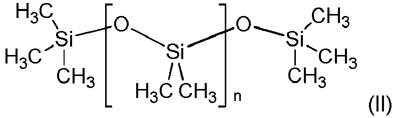 wobei der Anteil an Siloxanen mit N = (n + 2) > 9 höher als 5 Gew.-% und/oder N > 12 gleich oder höher als 2 Gew.-% ist. Dabei kann es bevorzugt sein, dass auch Anteile an Siloxanen mit N > 22 enthalten sind, deren Anteil bis zu 5 Gew.-% beträgt. Dabei kann es weiter bevorzugt sein, dass als Polyole Polymerpolyole alleine oder in Abmischungen mit ungefüllten Polyolen eingesetzt werden, wobei die Polymerpolyole vorzugsweise feste organische Füllstoffe in disperser Verteilung enthalten, und die Polyole einen Gehalt an primären Hydroxylgruppen von mindestens 70 % aufweisen. Bevorzugt einsetzbare Polydimethylsiloxane der Formel (II) werden insbesondere in EP 1777252 A1 beschrieben. Im Rahmen dieser Erfindung wurde gefunden, dass die Kombination von erfindungsgemäßen Mischungen (M) mit Siloxanen nach der Formel (II) im Sinne dieser Erfindung zu ganz besonders guten Ergebnisse bei der Herstellung von Polyurethanschaumstoffen, insbesondere von Form- und hochelastischen Weichschaumstoffen, führte.

Die Siloxane können im Rahmen der vorliegenden Erfindung (insbesondere im Rahmen der erfindungsgemäßen Verwendung) auch als Teil von Zusammensetzungen mit verschiedenen Trägermedien eingesetzt werden. Als Trägermedien kommen beispielweise Glykole, wie beispielsweise Monoethylenglycol (MEG), Diethylenglycol (DEG), Propylenglycol (PG) oder Dipropylenglycol (DPG), Alkoxylate oder Öle synthetischer und/oder natürlicher Herkunft in Frage.

Bevorzugt wird der Zusammensetzung zur Herstellung von Polyurethansystemen, vorzugsweise von Polyurethanschaumstoffen, so viel der Siloxane nach der Formel (I) zugegeben, dass der Massenanteil an Verbindungen der Formel (I) am fertigen Polyurethansystem, vorzugsweise dem Polyurethanschaum von 0,01 bis 10 Gew.-%, bevorzugt von 0,1 bis 3 Gew.-% beträgt.

Es kann vorteilhaft sein, wenn bei der Herstellung des Polyurethansystems eine Zusammensetzung hergestellt und/oder eingesetzt wird, die eine erfindungsgemäße Mischung (M) sowie zumindest eine Polyolkomponente, ggf. zumindest eine Isocyanatkomponente sowie optional ein oder mehrere Treibmittel aufweist, und diese Zusammensetzung reagiert wird. Besonders bevorzugt werden solche Zusammensetzungen eingesetzt, die die oben bei der Verwendung beschriebenen Stoffe bzw. Komponenten zur Herstellung von Polyurethanen, insbesondere von Polyurethanschäumen aufweisen.

Ein weiterer Gegenstand der Erfindung liegt in der Verwendung der zuvor beschriebenen erfindungsgemäßen Mischungen (M) zur Herstellung von emissionsarmen, insbesondere Amin-emissionsarmen Polyurethanen, insbesondere Polyurethanschaumstoffen, nämlich vorteilhafterweise emissionsarm hinsichtlich Emissionen stickstoffhaltiger Verbindungen, wie vorher auch Amin-Emissionen genannt. Bezüglich des Begriffs Amin-emissionsarm wird auf die vorangegangene Beschreibung und die dortigen Erläuterungen, insbesondere Testmethoden, verwiesen. Bezüglich bevorzugter Ausgestaltungen dieses Gegenstandes wird ebenfalls auf die vorangegangene Beschreibung verwiesen, insbesondere auf die genannten bevorzugten Ausführungsformen.

Ein weiterer Gegenstand der Erfindung liegt in der Verwendung der zuvor beschriebenen erfindungsgemäßen Mischungen (M) zur Herstellung von geruchsarmen Polyurethanen, vorzugsweise von geruchsarmen Polyurethanschaumstoffen, insbesondere von geruchsarmen Polyurethanweichschaumstoffen. Bezüglich des Begriffs "geruchsarm" wird auf die vorangegangene Beschreibung und die dortige Erläuterungen verwiesen. Bezüglich bevorzugter Ausgestaltungen dieses Gegenstandes wird ebenfalls auf die vorangegangene Beschreibung verwiesen, insbesondere auf die genannten bevorzugten Ausführungsformen.

Ein weiterer Gegenstand der Erfindung liegt in der Verwendung der zuvor beschriebenen erfindungsgemäßen Mischungen (M) zur Herstellung von hitzebeständigen und/oder alterungsbeständigen Polyurethansystemen, insbesondere Polyurethanschaumstoffen. Bezüglich des Begriffs "hitzebeständig" und "alterungsbeständig" wird auf die vorangegangene Beschreibung und die dortige Erläuterungen und Testmethoden verwiesen. Bezüglich bevorzugter Ausgestaltungen dieses Gegenstandes wird ebenfalls auf die vorangegangene Beschreibung verwiesen, insbesondere auf die genannten bevorzugten Ausführungsformen.

Ein weiterer Gegenstand der Erfindung liegt in der Verwendung der zuvor beschriebenen erfindungsgemäßen Mischungen (M) zur Herstellung von Polyurethansystemen, wobei ein besseres Processing, insbesondere bei der Herstellung von Form- und hochelastischen Weichschaumstoffen, ermöglicht wird.

Ein weiterer Gegenstand der Erfindung ist eine Zusammensetzung, enthaltend mindestens eine Polyolkomponente, wobei die Zusammensetzung zumindest eine erfindungsgemäße Mischung (M) aufweist, wobei die Zusammensetzung vorzugsweise mindestens eine Isocyanatkomponente aufweist.

Das molare Verhältnis der Gesamtmenge der in der erfindungsgemäßen Zusammensetzung enthaltenen stickstoffhaltigen Verbindungen, gegenüber der Gesamtmenge der mit Isocyanaten reaktiven Gruppen der Polyolkomponente beträgt dabei vorzugsweise von 4 × 10⁻⁴ zu 1 bis 0,2 zu 1.

Zusammensetzungen, wobei die stickstoffhaltigen Verbindungen, umfassend die stickstoffhaltigen Verbindungen der Mischung (M) sowie optionale zusätzliche Amin-Katalysatoren, in einem Massenanteil von 0,01 bis 20,0 Teilen (pphp), bevorzugt 0,01 bis 5,00 Teilen und besonders bevorzugt 0,02 bis 3,00 Teilen bezogen auf 100 Teile (pphp) Polyolkomponente eingesetzt werden, entsprechen einer bevorzugten Ausführungsform der Erfindung.

Die erfindungsgemäße Zusammensetzung kann zusätzlich ein oder mehrere Treibmittel, wie sie oben beschrieben sind, aufweisen. Neben oder an Stelle von Treibmitteln kann die erfindungsgemäße Zusammensetzung weitere Zusatzstoffe/Hilfsmittel oder Additive aufweisen, die bei der Herstellung von Polyurethansystemen, bevorzugt Polyurethanschäumen, eingesetzt werden. Eine Auswahl geeigneter Hilfsmittel/Zusatzstoffe/Additive, wie z. B. Schaumstabilisatoren oder Flammschutzmittel, wurde bereits oben bei der Herstellung der Polyurethansysteme, insbesondere der Polyurethanschaumstoffe beschrieben.

Die Verarbeitung der erfindungsgemäßen Zusammensetzungen zu Polyurethansystemen, insbesondere zu Polyurethanschaumstoffen, kann nach allen dem Fachmann geläufigen Verfahren erfolgen, beispielsweise im Handmischverfahren oder bevorzugt mit Hilfe von Verschäumungsmaschinen, insbesondere Niederdruck- oder Hochdruck-Verschäumungsmaschinen. Der Schäumungsprozess kann sowohl in horizontaler als auch in vertikaler Richtung erfolgen. Dabei können diskontinuierliche Verfahren, beispielsweise zur Produktion von Formschäumen, Kühlschränken, Automobilsitzen, und Paneelen, oder kontinuierliche Verfahren, beispielsweise bei Dämmplatten, Metallverbundelementen, Blockschäumen oder bei Sprühverfahren zum Einsatz kommen. Die Zusammensetzungen können hierbei sowohl direkt in die Mischkammer dosiert werden oder auch schon vor der Mischkammer einer der danach in die Mischkammer gelangenden Komponenten zugemischt werden. Die Zumischung kann auch im Rohstofftank erfolgen. Ebenso können die erfindungsgemäß eingesetzten Zusammensetzungen für die COz-Technologie benutzt werden.

Ein weiterer Gegenstand der vorliegenden Erfindung ist ein Polyurethansystem, welches durch eine Verwendung, wie zuvor beschrieben, erhältlich ist. Mittels der Verwendung von erfindungsgemäßen Mischungen (M), sind die nachfolgend beschriebenen erfindungsgemäßen Polyurethansysteme erhältlich.

Diese erfindungsgemäßen Polyurethansysteme sind vorzugsweise Polyurethanschäume, bevorzugt Polyurethanhartschäume, Polyurethanweichschäume, viskoelastische Schäume, hochelastische Schäume sogenannte "High Resilience Schäume" (HR), halbharte Polyurethanschäume, thermoverformbare Polyurethanschäume oder Integralschäume. Die Bezeichnung Polyurethan ist hierbei wiederum als Oberbegriff für ein aus Di- bzw. Polyisocyanaten und Polyolen oder anderen gegenüber Isocyanat reaktiven Spezies, wie z.B. Aminen, hergestelltes Polymer zu verstehen, wobei die Urethan-Bindung nicht ausschließlicher oder überwiegender Bindungstyp sein muss. Auch Polyisocyanurate und Polyharnstoffe sind ausdrücklich mit eingeschlossen.

Das erfindungsgemäße Polyurethansystem, insbesondere Polyurethanschaum, zeichnet sich vorzugsweise dadurch aus, dass es ein Polyurethanhartschaum, ein Polyurethanweichschaum, ein viskoelastischer Schaum, ein High Resilience (HR) Schaum, ein halbharter Polyurethanschaum, ein thermoverformbarer Polyurethanschaum oder ein Integralschaum ist, wobei der Massenanteil der Mischung (M) in dem erfindungsgemäßen Polyurethansystem bzw. der durch Umsetzung dieser erhaltenen Reste am fertigen Polyurethanschaum von 0,005 bis 10 Gew.-%, bevorzugt von 0,05 bis 3 Gew.-%, besonders bevorzugt 0,1 bis 1 Gew.-%, ist.

In einer bevorzugten Ausführungsform handelt es sich bei den erfindungsgemäßen bzw. erfindungsgemäß hergestellten Polyurethanschaumstoffen um Weichschaumstoffe, bevorzugt Kaltweichschaumstoffe, insbesondere Form- und hochelastische Kaltweichschaumstoffe.

Eine bevorzugte Zusammensetzung zur Herstellung von Polyurethan- bzw. Polyisocyanurat-Schaum im Sinne der vorliegenden Erfindung weist ein Raumgewicht (RG) von vorzugsweise 5 bis 800, insbesondere 5 bis 300, bevorzugt 5 bis 150, besonders bevorzugt von 10 bis 90 kg/m³ auf und hat insbesondere die folgende Zusammensetzung:

| Komponente | Gewichtsanteil |
|---|---|
| Polyol | 100 |
| Amin-Katalysator | 0,05 bis 5 |
| Metall-Katalysator | 0,01 bis 5 |
| Kalium-Trimerisierungskatalysator | 0 bis 10 |
| Siloxan | 0,1 bis 15, vorzugsweise 0,2 bis 7 |
| Wasser | 0 bis < 25, vorzugsweise 0,1 bis 15 |
| Treibmittel | 0 bis 130 |
| Flammschutzmittel | 0 bis 70 |
| Füllstoffe | 0 bis 150 |
| weitere Additive | 0 bis 20 |
| Isocyanat-Index: | größer 15 |

Unter Amin-Katalysator im Sinne der vorigen Zusammensetzung fallen die in der erfindungsgemäßen Mischung (M) enthaltenen stickstoffhaltigen Verbindungen, insbesondere umfassend die Komponenten (a) und (c) zuzüglich ggf. zusätzliche Amin-Katalysatoren, die optional einsetzbar sind, und nicht Bestandteil der Komponenten (a) und (c) sind.

Ein weiterer Gegenstand der Erfindung ist die Verwendung von Polyurethansystemen, insbesondere von Polyurethanschäumen, wie zuvor beschrieben, als Kühlschrankisolierung, Dämmplatte, Sandwichelement, Rohrisolation, Sprühschaum, 1- & 1,5-Komponenten-Dosenschaum, Holzimitat, Modellschaum, Blumensteckschaum, Verpackungsschaum, Matratze, Möbelpolster, Möbelformschaum, Kopfkissen, "Rebonded Foam", Schwammschaum, Automobil-Sitzpolster, Kopfstütze, Instrumententafel, Automobil-Innenverkleidung, Automobil-Dachhimmel, Schallabsorptionsmaterial, Lenkrad, Schuhsohle, Teppichrückseitenschaum, Filterschaum, Dichtschaum, Dichtmittel und Kleber oder zur Herstellung entsprechender Produkte.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

Die nachfolgend beispielhaft aufgeführten Verschäumungsexperimente sollen zur Veranschaulichung der vorliegenden Erfindung dienen. Als Beispiel für die erfindungsgemäßen Mischungen (M) soll die im Folgenden als Amin-Mischung (I) bezeichnete erfindungsgemäße Mischung dienen, die aus N,N-Dimethylaminopropylamin (50 Gew.-%), 1,1'-{[3-(Dimethylamino)propyl]imino}bis-2-propanol (10 Gew.-%), Bis(3-dimethylaminopropyl)amin (10 Gew.-%) und Wasser (30 Gew.-%) besteht. Die Amin-Mischung (I) weist einen Flammpunkt > 60 °C auf, ermittelt nach dem Pensky-Martens Verfahren mit geschlossenem Tiegel gemäß DIN EN ISO 2719:2003-09, hierin nach der Messmethode A unter Verwendung eines Pensky-Martens 4 Messgerätes. Für alle Formulierungen, die zusätzliches Wasser enthalten, wurde der Massenanteil an Wasser in der Amin-Mischung (I) berücksichtigt und je nach gewählter Formulierung wahlweise die Menge des zusätzlichen Wasser oder der Amin-Mischung (I) entsprechend angepasst.

### Hartschaum - Verschäumungsbeispiele

Beispiel 1: Herstellung von Polyurethanhartschaumstoffen, beispielsweise zur Anwendung bei der Isolation von Kühlmöbeln

Für die anwendungstechnische Ausprüfung der erfindungsgemäßen stickstoffhaltige Verbindungen enthaltenden Mischungen (M) wurde die in Tabelle 1 angegebene Schaumformulierung verwendet.

**Tabelle 1: Formulierung 1 für Hartschaum-Anwendungen.**

| Formulierung 1 | Massenteile (pphp) |
|---|---|
| Polyol 1¹⁾ | 100 Teile |
| Wasser⁴⁾ | 2,60 Teile |
| Cyclopentan | 13,1 Teile |
| Amin-Katalysator⁴⁾ | 1,50 Teile |
| TEGOSTAB^{®} B 8460²⁾ | 1,50 Teile |
| Desmodur^{®} 44V20L³⁾ | 198,5 Teile |

| | |
|---|---|
| ¹⁾Polyol 1: Sorbitol/Glycerin-basiertes Polyetherpolyol mit einer OH-Zahl von 471 mgKOH/g. ²⁾Polyethermodifiziertes Polysiloxan. ³⁾polymeres MDI der Firma Bayer, 200 mPa s, 31,5 % NCO, Funktionalität 2,7. ⁴⁾ Wassermenge bei Verwendung von Amin-Mischung (I) entsprechend angepasst. | |

Die Durchführung der Verschäumungen erfolgte im Handmischverfahren. Es wurden die Formulierungen, wie in Tabelle 1 angegeben, mit verschiedenen Amin-Katalysatoren verwendet. Dazu wurden Polyol 1, ein konventioneller Amin-Katalysator oder die erfindungsgemäße Amin-Mischung (I) , Wasser, Schaumstabilisator und Treibmittel in einen Becher eingewogen und mit einem Tellerrührer von 6 cm Durchmesser 30 Sekunden bei 1000 U/min vermischt. Durch erneutes Abwiegen wurde die beim Mischvorgang verdunstete Treibmittelmenge bestimmt und wieder ergänzt. Jetzt wurde das Isocyanat (MDI) zugegeben, die Reaktionsmischung wurde mit dem beschriebenen Rührer 5 s bei 3000 U/min verrührt und sofort in eine mit Papier ausgekleidete Kiste (27 cm × 14 cm Grundfläche und 14 cm Höhe) überführt. Zur Beurteilung der katalytischen Eigenschaften wurden die folgen-den charakteristischen Parameter bestimmt: Creme-Zeit, Gel-Zeit (Fadenziehzeit), Steigzeit und Klebfrei-Zeit.

Die Ergebnisse der Beurteilung der katalytischen Eigenschaften der erfindungsgemäßen Amin-Mischung (I) sind in Tabelle 2 zusammengestellt. Als Vergleichskatalysatoren nach dem Stand der Technik wurden N,N-Dimethylcyclohexylamin (DMCHA), Dimethylaminoethoxyethanol (DMEE) und 1,1'-{[3-(Dimethylamino)propyl]imino}bis-2-propanol (TEGOAMIN^{®} ZE 1, erhältlich bei der Firma Evonik Industries) eingesetzt.

**Tabelle 2: Ergebnisse der Verschäumungen nach Formulierung 1 (Tabelle 1).**

| Amin-Katalysator | Cremezeit [s]¹⁾ | Gelzeit [s]¹⁾ | Steigzeit [s]¹⁾ | Klebfreizeit [s]¹⁾ |
|---|---|---|---|---|
| DMCHA | 38 | 148 | 293 | 315 |
| DMEE | 31 | 154 | 272 | 303 |
| TEGOAMIN^{®} ZE 1 | 40 | 243 | 325 | 415 |
| Amin-Mischung (I) | 38 | 210 | 301 | 395 |

| | | | | |
|---|---|---|---|---|
| ¹⁾Zeit-Angaben in Sekunden [s]. | | | | |

Wie der Tabelle 2 entnommen werden kann, zeigte die Amin-Mischung (I) eine gute katalytische Aktivität in der gewählten Polyurethan-Hartschaum-Anwendung. Die Amin-Mischung (I) wies eine höhere katalytische Aktivität auf als TEGOAMIN^{®} ZE 1. Hinsichtlich der Selektivität zeigte die Amin-Mischung (I) ein ähnliches Profil wie TEGOAMIN^{®} ZE 1, jedoch stärkere Aktivität und eine erhöhte Selektivität hin zur Gel-Reaktion, was aus der jeweils niedrigeren Gelzeit ersichtlich wird.

### Weichschaum - Anwendungstechnische Tests

Physikalische Eigenschaften der Polyurethanweichschaumstoffe:
Die hergestellten Polyurethanweichschäume wurden anhand folgender physikalischer Eigenschaften beurteilt:
a) Rücksacken des Schaumstoffes nach dem Ende der Steigphase (=Rückfall): Der Rückfall, bzw. das Nachsteigen ergibt sich aus der Differenz der Schaumhöhe nach direktem Abblasen und nach 3 Minuten. nach Abblasen des Schaums. Die Schaumhöhe wird dabei durch eine an einem Zentimetermaß befestigte Nadel auf dem Maximum in der Mitte der Schaumkuppe gemessen. Ein positiver Wert beschreibt hierbei das Rücksacken des Schaumes nach dem Abblasen, ein negativer Wert beschreibt entsprechend das Nachsteigen des Schaumes.
b) Schaumhöhe: Die Endhöhe des Schaums wird dadurch bestimmt, dass der Rückfall bzw. das Nachsteigen von bzw. zu der Schaumhöhe nach dem Abblasen subtrahiert bzw. addiert wird. Die Schaumhöhe wird in Zentimeter (cm) angegeben.
c) Stauchhärte CFD, 40 % nach DIN EN ISO 3386-1:2010-09. Die Angabe der Messwerte erfolgt in Kilopascal (kPa).
d) Compression Set, 50 % nach DIN EN ISO 1856:2008-01.
e) Feuchtwärme-Alterung (Humid Aging) nach DIN EN ISO 2440:2000-01.

### Messung der Schaum-Emissionen (VOC- und Fog-Wert) nach Prüfvorschrift VDA 278 in der Version vom Oktober 2011:

Das Verfahren dient zur Ermittlung von Emissionen aus nichtmetallischen Materialein, die für Formteile in Kraftfahrzeugen zum Einsatz kommen. Die Emission von leichtflüchtigen organischen Verbindungen (VOC-Wert, 30 Minuten bei 90 °C) sowie dem Anteil kondensierbarer Substanzen (Fog-Wert, 60 Minuten bei 120 °C), insbesondere der Katalyse-bedingten Emissionen, die Emissionen der einzelnen Bestandteile erfindungsgemäßer Katalysatorkombinationen oder ihrer Zer- oder Umsetzungsprodukte, wurde nach Prüfvorschrift VDA 278 in der Version vom Oktober 2011 bestimmt. Im Folgenden wird die Durchführung der entsprechenden Thermodesorption mit anschließender Gaschromatographie/ Massenspektrometrie-Kopplung (GC/MS) beschrieben.
a) Messtechnik: Die Thermodesorption wurde mit einem Thermodesorber "TDS2" mit Probenwechsler der Fa. Gerstel, Mülheim, in Verbindung mit einem Agilent 7890/5975 GC/MSD-System durchgeführt.
b) Die Messbedingungen für VOC-Messungen sind in Tabellen 3 und 4 angegeben.

**Tabelle 3: Messparameter Thermodesorption für den VOC-Analysenlauf.**

| | |
|---|---|
| Thermodesorption | Gerstel TDS2 |
| Desorptionstemperatur | 90 °C |
| Desorptionsdauer | 30 min |
| Fluss | 65 ml/min |
| Transferline | 280°C |
| Kryofokussierung | KAS 4 |
| Liner | Glasverdampferrohr mit silanisierter Glaswolle |
| Temperatur | -150°C |

**Tabelle 4: Messparameter Gaschromatographie/Massenspektrometrie für den VOC-Analysenlauf.**

| | |
|---|---|
| GC | Kapillar-GC Agilent 7890 |
| Injektor | PTV Split 1:50 |
| Temperaturprogramm | -150°C; 1 min; 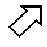 10°C/s; 280°C |
| Säule | Agilent 19091B-115, Ultra 2, 50 m * 0,32 mm dF 0,5µm |
| Fluss | 1,3 ml/min const. Flow |
| Temperaturprogramm | 50°C; 2 min; 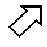 3°C/min; 92°C; 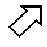 5°C/min; 160°C; 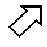 10°C/min; 280°C, 20 min |
| Detektor | Agilent MSD 5975 |
| Modus | Scan 29-350 amu 2,3 scans/sec |
| Auswertung | Auswertung des Totalionenstrom-Chromatrogramms durch Berechnung als Toluoläquivalent |

c) Kalibrierung: Zur Kalibrierung wurde 2 µl eines Gemisches aus Toluol und Hexadekan in Methanol (je 0,125 mg/ml) auf ein gereinigtes, mit Tenax^{®} TA (mesh 35/60) gefülltes Adsorptionsröhrchen gegeben und vermessen (Desorption 5 min; 280 °C).
d) Bei Tenax^{®} TA handelt es sich um ein poröses Polymerharz basierend auf 2.6-Diphenylen¬oxid, erhältlich beispielsweise bei der Firma Scientific Instrument Services, 1027 Old York Rd., Ringoes, NJ 08551.
e) Probenvorbereitung für die VOC-Messung: 15 mg Schaumstoff wurden in drei Teilproben in einem Thermodesorptionsröhrchen platziert. Dabei wurde darauf geachtet, dass der Schaum nicht komprimiert wird.
f) Probenvorbereitung für die Fog-Messung: Es wurde die gleiche Schaumprobe verwendet, wie für die VOC-Messung. Hinsichtlich der Messanordnung wurde immer zuerst die VOC-Messung und im Anschluss die Fog-Messung durchgeführt, wobei mittels eines Autosampler-Systems ein jeweils konstanter Abstand zwischen den entsprechenden VOC- und Fog-Messungen gewährleistet wurde.
g) Die Messbedingungen für Fog-Messungen sind in Tabelle 5 und 6 wiedergegeben.

**Tabelle 5: Messparameter Thermodesorption für den Fog-Analysenlauf.**

| | |
|---|---|
| Thermodesorption | Gerstel TDS2 |
| Desorptionstemperatur | 120 °C |
| Desorptionsdauer | 60 min |
| Fluss | 65 ml/min |
| Transferline | 280°C |
| Kryofokussierung | KAS 4 |
| Liner | Glasverdampferrohr mit silanisierter Glaswolle |
| Temperatur | -150°C |

**Tabelle 6: Messparameter Gaschromatographie/Massenspektrometrie für den Fog-Analysenlauf.**

| | |
|---|---|
| GC | Kapillar-GC Agilent 7890 |
| Injektor | PTV Split 1:50 |
| Temperaturprogramm | -150°C; 1 min; 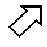 10°C/s; 280°C |
| Säule | Agilent 19091B-115, Ultra 2, 50 m * 0,32 mm dF 0,5µm |
| Fluss | 1,3 ml/min const. Flow |
| Temperaturprogramm | 50°C; 2 min; 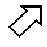 25°C/min; 160°C; 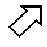 10°C/min; 280°C; 20 min |
| Detektor | Agilent MSD 5975 |
| Modus | Scan 29-450 amu 2,3 scans/sec |
| Auswertung | Auswertung des Totalionenstrom-Chromatrogramms durch Berechnung als Hexadekanäquivalent |

h) Kalibrierung: Zur Kalibrierung wurde 2 µl eines Gemisches aus Toluol und Hexadekan in Methanol (je 0,125 mg/ml) auf ein gereinigtes, mit Tenax^{®} TA (mesh 35/60) gefülltes Adsorptionsröhrchen gegeben und vermessen (Desorption 5 min; 280 °C).

PVC-Verfärbungstest nach der Volkswagen Prüfvorschrift VW PV 3937:
a) Vorbereitung: Für die Testmethode werden 1000 ml Weithalsgläser mit Deckel verwendet. Die Weithalsgläser müssen sauber und trocken sein. Um dies zu gewährleisten werden die Gläser vor der Benutzung gereinigt, mit destilliertem Wasser gespült und bis kurz vor der Messung zur Trocknung (temperieren auf 100 °C) im Trockenschrank gelagert. Die PVC-Folie (ursprüngliche Farbe hellgrau) muss ausgeschnitten werden und glatt mit der Strukturseite Richtung Glas/Probenkörper in den Deckel eingebracht werden, so dass das 1000 ml Weithalsglas luftdicht verschlossen werden kann.

Durchführung: Ca. 24 Stunden nach der Reaktion/Verschäumung (+/- 1 Stunde) wird ein genau 5 × 5 × 2 cm³ großer Probenkörper aus dem Kern geschnitten, auf den Boden des auf 100 °C temperierten 1000 ml Weithalsglases gelegt, mit dem Deckel, beinhaltend die PVC-Folie, luftdicht verschlossen und 72 Stunden bei einer Temperatur von 100 °C gelagert. Um Messschwankungen zu vermeiden, sollte der Probenkörper aus dem Kern, mindestens ≥ 3 cm von der Außenseite entfernt und bei jedem Test aus dem gleichen Bereich geschnitten werden. Nach 72 Stunden werden die Gläser für 30 Minuten auf Raumtemperatur abgekühlt. Die PVC-Folie wird im Folgenden entnommen und einer optischen Kontrolle hinsichtlich Verfärbung unterzogen. Zu jeder Messung ist ein BLANK durchzuführen, also eine Messung ohne Schaum. Nach der BLANK-Messung sollte sich keine Farbveränderung zeigen und die PVC-Folie weiterhin grau sein.

### Weichschaum - Verschäumungsbeispiele

### Beispiel 2: Herstellung von HR-Schäumen (Block/Molded)

Für die anwendungstechnische Ausprüfung der erfindungsgemäßen Mischungen (M) wurde die in Tabelle 7 angegebene Schaumformulierung verwendet.

**Tabelle 7: Formulierung 2 für Kaltweichschaum-Anwendungen (HR-Block/Molded).**

| Formulierung 2 | Massenteile (pphp) |
|---|---|
| Polyol 1¹⁾ | 70,0 Teile |
| Polyol 2²⁾ | 30,0 Teile |
| Wasser³⁾ | 3,70 Teile |
| Glycerin | 0,50 Teile |
| Diethanolamin (DEOA) | 1,00 Teile |
| Amin-Katalysator³⁾ | 0,25 Teile |
| TEGOSTAB^{®} B 8716 LF2⁴⁾ | 1,00 Teile |
| Desmodur^{®} T 80⁵⁾ | 44,0 Teile |

| | |
|---|---|
| ¹⁾Polyol 1: Sorbitol/Glycerin-basiertes Polyetherpolyol, mit einer OH-Zahl von 32 mgKOH/g. ²⁾Polyol 2: Glycerin-basiertes Polyetherpolyol, enthaltend 43% Feststoff (SAN), mit einer OH-Zahl von 20 mgKOH/g. ³⁾Amin-Katalysatormenge bzw. Wassermenge bei Verwendung von Amin-Mischung (I) entsprechend angepasst. ⁴⁾Zubereitung von organomodifizierten Polysiloxanen. ⁵⁾Toluylendiisocyanat T 80 (80 % 2,4-Isomer, 20 % 2,6-Isomer) der Firma Bayer, 3 mPa·s, 48 % NCO, Funktionalität 2. | |

Bei der Verschäumung wurden 500 g Polyol eingesetzt; die anderen Formulierungsbestandteile wurden entsprechend umgerechnet. Dabei bedeutete beispielsweise 1,00 Teil einer Komponente 1,00 g einer Substanz je 100 g Polyol.

Zur Verschäumung wurden die Polyole, Wasser, Amin-Katalysator, Vernetzter (DEOA und Glycerin), und Silikonstabilisator unter Rühren gut vermischt. Nach Zugabe des Isocyanats wurde mit einem Rührer 7 s bei 2500 U/min. gerührt und das Gemisch in einem mit Papier ausgekleideten Holzkasten (27 cm × 27 cm Grundfläche und 27 cm Höhe) gegossen.

Die Ergebnisse der Beurteilung der katalytischen Eigenschaften der erfindungsgemäßen Amin-Mischung (I) sind in Tabelle 8 zusammengestellt. Als Vergleichskatalysatoren nach dem Stand der Technik wurden Triethylendiamin, 33% Gew.-ige Lösung in Dipropylenglykol (TEGOAMIN^{®} 33, erhältlich bei der Firma Evonik Industries), 1,1'-{[3-(Dimethylamino)propyl]imino}bis-2-propanol (TEGOAMIN^{®} ZE 1, erhältlich bei der Firma Evonik Industries), 1-[Bis[3-(dimethylamino)propyl]amino]-2-propanol (Jeffcat^{®} ZR-50, erhältlich bei der Firma Huntsman) eingesetzt. Es wurden jeweils 0,25 pphp (= Gewichtsteile bezogen auf 100 Gewichtsteile Polyol) Amin-Katalysator eingesetzt.

**Tabelle 8: Ergebnisse der Verschäumungen nach Formulierung 2 (Tabelle 7).**

| Amin | Gelzeit [s] | Steigzeit [s] | Höhe [cm] | Rückfall [cm] | Zellenzahl¹⁾ [cm⁻¹] |
|---|---|---|---|---|---|
| TEGOAMIN^{®} 33 | 94 | 147 | 31,6 | 0,8 | 10,5 |
| TEGOAMIN^{®} ZE 1 | 132 | 214 | 30,5 | 0,0 | 9,5 |
| Jeffcat^{®} ZR-50 | 90 | 161 | 31,6 | 0,5 | 10,5 |
| DABCO^{®} NE 1070 | 154 | 221 | 26,4 | -0,1 | 9 |
| Amin-Mischung (I)²⁾ | 103 | 186 | 30,2 | 0,5 | 10 |

| | | | | | |
|---|---|---|---|---|---|
| ¹⁾Zellenzahl = Anzahl der Zellen pro cm [cm⁻¹]. ²⁾0,36 pphp Amin-Mischung (I) verwendet (entspricht 0,25 pphp effektiver Amin-Anteil). | | | | | |

Wie der Tabelle 8 entnommen werden kann, zeigte die erfindungsgemäße Amin-Mischung (I) eine sehr gute katalytische Aktivität im Kaltweichschaum. Hinsichtlich des katalytischen Profils in dieser Anwendung kann die Amin-Mischung (I) als die Gel-Reaktion favorisierender Amin-Katalysator eingestuft werden, wobei hier die nahezu vergleichbare Aktivität mit Jeffcat^{®} ZR-50 und die stärkere Aktivität gegenüber TEGOAMIN^{®} ZE 1 und DABCO^{®} NE 1070 herausgestellt werden soll.

Das Emissionsverhalten der zuvor beschriebenen Schäume wurde im Anschluss nach Prüfvorschrift VDA 278 in der Version vom Oktober 2011, wie oben beschrieben, untersucht. Die Ergebnisse sind in Tabelle 9 wiedergegeben.

**Tabelle 9: Emissionen von Kaltweichschaumstoffen nach VDA 278.**

| | Gehalt an flüchtigen organischen Verbindungen (VOC) | | | |
|---|---|---|---|---|
| Amin | VOC_{ges}¹⁾ [µg/g] | VOC_{Amin}¹⁾ [µg/g] | Fog_{ges}²⁾ [µg/g] | Fog_{Amin}²⁾ [µg/g] |
| TEGOAMIN^{®} 33 | 499 | 183 | 287 | < 10 |
| TEGOAMIN^{®} ZE 1 | 315 | < 10 | 313 | < 10 |
| Jeffcat^{®} ZR-50 | 336 | < 10 | 409 | 101 |
| DABCO^{®} NE 1070 | 440 | < 10 | 721 | 347 |
| Amin-Mischung (I) | 321 | < 10 | 203 | < 10 |

| | | | | |
|---|---|---|---|---|
| ¹⁾VOC_{ges} = Gesamtemission; VOC_{Amin} = Amin-Emissionen aller flüchtigen organischen Verbindungen bei 90 °C (30 Minuten). ²⁾Fog_{ges} = Gesamtemission; Fog_{Amin} = Amin-Emissionen aller flüchtigen organischen Verbindungen bei 120 °C (60 Minuten). | | | | |

Wie der Tabelle 9 entnommen werden kann, zeigte die erfindungsgemäße Amin-Mischung (I) keine Emissionen nach der VDA 278, weder bei der Bestimmung des VOC-Gehalts, noch bei der Bestimmung des Fog-Wertes. Hinsichtlich der VOC-Emissionen erfüllen beispielsweise auch Jeffcat^{®} ZR-50, DABCO^{®} NE 1070 und TEGOAMIN^{®} ZE 1 diese Anforderungen. TEGOAMIN^{®} ZE 1 weist jedoch gegenüber Jeffcat^{®} ZR-50 einen besseren Fog-Wert auf, ist aber hinsichtlich seiner katalytischen Aktivität deutlich schwächer. Die Amin-Mischung (I) hat eine deutlich bessere katalytische Aktivität als DABCO^{®} NE 1070 und TEGOAMIN^{®} ZE 1, hinsichtlich der Fog-Emissionen aber auch verbesserte Werte gegenüber Jeffcat^{®} ZR-50, wobei die katalytische Aktivität gegenüber Jeffcat^{®} ZR-50 nahezu identisch ist. Für Automobilanwendungen bedeutet dies eine Erniedrigung potentieller Ablagerungen leicht kondensierbarer Substanzen im Automobilinnenraum, beispielsweise auf der Windschutzscheibe, auch als "Windshield-Fogging" bezeichnet.

### Beispiel 3: Verbesserung des Processings bei der Herstellung von HR-Schäumen (Block/Molded)

Ein wesentlicher Nachteil vieler konventioneller Amin-Mischungen, die als Katalysatoren bei der Polyurethanschaumstoffherstellung verwendet werden, sind Processing-Probleme, die durch die Lagerung von Amin-Mischungen entstehen, d.h. zum Beispiel beim Lagern, Öffnen und Schließen der Gebinde verändert sich die Zusammensetzung der Amin-Mischung, so dass nach längerer Lagerung keine gleich bleibende Katalysator-Performance mehr gewährleistet werden kann. Im Gegensatz hierzu kann beispielsweise unter Verwendung der erfindungsgemäßen Amin-Mischung (I) ein konstanteres Processing ermöglicht werden.

Ein beispielhafter Vergleich der erfindungsgemäßen Amin-Mischung (I) mit der nicht erfindungsgemäßen Amin-Mischung (II) wurde unter Verwendung der Formulierung 2 (Tabelle 7) durchgeführt. Es wurden jeweils 2 Proben (je 100 g) der entsprechenden Amin-Mischungen (I) und (II) in 250 ml Glasflaschen vorbereitet. Zur Simulation der Veränderung der Zusammensetzung wurde jeweils eine Probe jeder Mischung bei RT für einen Zeitraum von 22 Stunden offen und geschlossen gelagert. Nach der Lagerung wurden die Proben mit gleicher Einsatzmenge (0.25 pphp bezogen auf den Amin-Gehalt der Mischung) verschäumt. Die Menge des zusätzlichen Wassers (aus Formulierung 2) wurde für die erfindungsgemäßen Amin-Mischungen (I) entsprechend angepasst. Die Ergebnisse sind in Tabelle 10 wiedergegeben.

**Tabelle 10: Vergleich der Processing-Eigenschaften nach Formulierung 2 (Tabelle 7).**

| Amin-Mischung | Gelzeit [s] | Steigzeit [s] | Höhe [cm] | Randzone | Zellenzahl¹⁾ [cm⁻¹] |
|---|---|---|---|---|---|
| Amin-Mischung (I) (geschl. Lagerung) | 102 | 189 | 31,1 | OK | 10 |
| Amin-Mischung (I) (offene Lagerung) | 103 | 193 | 30,9 | OK | 10 |
| Amin-Mischung (II)²⁾ (geschl. Lagerung) | 106 | 193 | 31,2 | OK | 10 |
| Amin-Mischung (II)²⁾ (offene Lagerung) | 116 | 223 | 29,6 | Störungen | 10 |

| | | | | | |
|---|---|---|---|---|---|
| ¹⁾Zellenzahl = Anzahl der Zellen pro cm [cm⁻¹]. ²⁾Amin-Mischung (II): N,N-Dimethylaminopropylamin (70 Gew.-%), 1,1' -{[3-(Dimethylamino)propyl]imino}bis-2-propanol (30 Gew.-%). | | | | | |

Wie der Tabelle 10 entnommen werden kann, war unter Verwendung der Amin-Mischung (I) ein konstantes Processing, d.h. eine vergleichbare Performance, gewährleistet, unabhängig davon, ob die Amin-Mischung geschlossen oder offen gelagert wurde. Die Zusammensetzung der Amin-Mischung (II) hingegen hatte sich nach der offenen Lagerung so stark verändert, dass bei gleicher Einsatzmenge kein reproduzierbares Ergebnis im Vergleich zur geschlossenen Lagerung erzielt werden konnte. Darüber hinaus verlor die Amin-Mischung (II) nach offener Lagerung an katalytischer Aktivität, was an der längeren Gel- und Steigzeit sowie der verringerten Schaumhöhe im Vergleich zur geschlossenen Lagerung zu erkennen ist. Außerdem waren Störungen in der Randzone des Schaums zu erkennen. Beide Beobachtungen erfordern eine Anpassung der Katalysatormenge oder der Verschäumungs-Formulierung, was einen deutlichen Nachteil, insbesondere bei der industriellen Polyurethanschaumstoffherstellung bedeutet. Gebinde von Amin-Katalysatoren werden für Verschäumungen in der Regel nicht vollständig aufgebraucht und vor der nächsten Verwendung über einen längeren Zeitraum gelagert.

### Beispiel 4: Maschinenversuche zur Herstellung von HR-Schäumen (Block/Molded) unter Verwendung eines Katalysatorsystems aus Blow- & Gel-Katalysator

Die Maschinenversuche zur Herstellung von Kaltweichschaumstoffen wurden mit einer Hennecke HK 270 Maschine mit MQ-Mischkopf durchgeführt.

Zur Simulierung eines besonders anwendungsnahen Kaltschaumsystems wurden die Maschinenversuche unter Verwendung der eingangs beschriebenen Formulierung 2 (Tabelle 7) mit jeweils einem Blow-Amin-Katalysator und einem Gel-Amin-Katalysator durchgeführt. Als katalytisches Vergleichssystem diente das System aus 1-[Bis[3-(dimethylamino)propyl]amino]-2-propanol (Jeffcat^{®} ZR-50, erhältlich bei der Firma Huntsman, als Gel-Komponente) und 2-(2-(2-Dimethylaminoethoxy)-ethylmethylamino)-ethanol (Jeffcat^{®} ZF-10, erhältlich bei der Firma Huntsman, als Blow-Komponente). Als erfindungsgemäßes System wurde die Amin-Mischung (I) als Gel-Komponente zusammen mit Jeffcat^{®} ZF-10 als Blow-Komponente eingesetzt.

Der Formschaum wurde in einer beheizbaren Aluminiumform (40 × 40 × 10cm) hergestellt. Die Formtemperatur wurde hierbei auf 67°C eingestellt und die Entformzeit betrug 6 Minuten. Die Schäume wurden von Hand aufgedrückt, 7 Tage bei 21 °C und 50 % Luftfeuchtigkeit gelagert und im Anschluss die benötigten Probenkörper für die physikalischen Messungen aus dem Schaum geschnitten.

Als Kenngrößen wurde die Härte (40% CFD) nach der Methode DIN EN ISO 3386-1:2010-09 und 50% Compression Set nach der Methode DIN EN ISO 1856:2008-01 gemessen. Die gleichen Eigenschaften wurden nach der Feuchtwärme-Alterung nach der Methode DIN EN ISO 2440:2000-01 (Autoklav, 15 Stunden / 120 °C / 100 % Luftfeuchtigkeit) wurden gemessen. Außerdem wurden die zuvor beschriebenen Schäume hinsichtlich ihres Einflusses auf die Verfärbung von Kunststoffen untersucht. Hierzu wurde ein PVC-Verfärbungstest gemäß der Volkswagen-Prüfvorschrift VW PV 3937, wie oben beschrieben, durchgeführt. Nach der Untersuchung wurde die PVC-Folie einer optischen Kontrolle unterzogen. Die Ergebnisse sind in Tabelle 11 zusammengefasst.

**Tabelle 11: Ergebnisse der Maschinenversuche nach Formulierung 2 (Tabelle 7).**

| Katalysatorsystem | 40% CFD [kPa] | 40% CFD nach Alterung [kPa] | 50% CS | 50% nach Alterung CS | PVC Staining |
|---|---|---|---|---|---|
| 1¹⁾ | 2,2 | 2,6 | 10 | 29 | rötliche Verfärbung |
| 2²⁾ | 2,3 | 2,6 | 12 | 30 | keine Verfärbung |

| | | | | | |
|---|---|---|---|---|---|
| ¹⁾Katalysatorsystem 1: Gel-Komponente (Jeffcat^{®} ZR-50): 0,50 pphp / Treib-Komponente: Jeffcat^{®} ZF-10): 0,08 pphp. ²⁾Katalysatorsystem 2: Gel-Komponente A (Amin-Mischung (I)): 0,89 pphp (entspricht 0,62 pphp effektiver Amin-Menge) / Treib-Komponente B (Jeffcat^{®} ZF-10): 0,08 pphp. | | | | | |

Wie der Tabelle 11 entnommen werden kann, lässt sich durch Substitution von Jeffcat^{®} ZR-50 durch die erfindungsgemäße Amin-Mischung (I) ein qualitativ gleichwertiger Polyurethanschaum herstellen, was unter anderem anhand der vergleichbaren Werte für die Schaumhärte (40% CFD) und das Compression Set (50% CS) deutlich wird. Auch hinsichtlich der Schaumalterung kann hier also bei Substitution der konventionellen Gel-Komponente mit der erfindungsgemäßen Amin-Mischung (I) eine gleichwertiger Schaum erhalten werden. Anzumerken ist, dass die Aktivität der Amin-Mischung (I) in dieser Formulierung etwas geringer ist als die von Jeffcat^{®} ZR-50. Um eine ähnliche Performance zu erzielen muss daher mehr erfindungsgemäßer Katalysator eingesetzt werden. Obwohl jedoch eine größere Menge Amin-Mischung (I) verwendet wird ergeben sich auch bei dieser Formulierung Emissions-Vorteile gegenüber der konventionellen Katalysator-Kombination 1. So wurde trotz der größeren Menge an Katalysator keine Verfärbung der PVC-Oberfläche nach der Volkswagen-Methode VW PV3937 beobachtet, wohingegen unter Verwendung des auf Jeffcat^{®} ZR-50 basierenden Systems eine rötliche Färbung der grauen PVC-Kunststofffolie beobachtet wurde. Die Verfärbung von Kunststoffteilen stellt beispielsweis ein Problem bei der Anwendung in Automobilinnenräumen dar.

## Patentansprüche

1. Verwendung einer stickstoffhaltige Verbindung(en) enthaltenden Mischung (M) bei der Herstellung von Polyurethanen, insbesondere Polyurethanschaumstoffen, bevorzugt Polyurethanweichschaumstoffen, **dadurch gekennzeichnet, dass** die genannte Mischung (M) folgende Bestandteile enthält
(a) N,N,-Dimethylaminopropylamin, in einer Menge von 40%-95 Gew.-%,
(b) Wasser in einer Gesamtmenge von ≥ 10 Gew.-%,
(c) zumindest ein Amin ausgewählt aus der Gruppe 1,1'-{[3-(Dimethylamino)propyl]imino}bis-2-propanol, Bis(3-dimethylaminopropyl)amin und/oder 1-[Bis[3-(dimethylamino)propyl]amino]-2-propanol in einer Gesamtmenge von ≥ 5 Gew.-%,
Gew.-% jeweils bezogen auf die gesamte Mischung (M).

2. Verwendung nach Anspruch 1, **dadurch gekennzeichnet, dass** die Mischung (M) die Komponente (c) in einer Gesamtmenge von 10-95 Gew.-%, insbesondere 10-60 Gew.-% enthält, Gew.-% jeweils bezogen auf die gesamte Mischung (M).

3. Verwendung nach einem der vorherigen Ansprüche, **dadurch gekennzeichnet, dass** die Mischung (M) einen Flammpunkt > 60 °C aufweist, gemessen nach dem Pensky-Martens Verfahren mit geschlossenem Tiegel gemäß DIN EN ISO 2719:2003-09.

4. Zusammensetzung enthaltend mindestens eine Polyolkomponente, **dadurch gekennzeichnet, dass** die Zusammensetzung zumindest eine Mischung (M) nach einem der vorherigen Ansprüche enthält und wobei die Zusammensetzung vorzugsweise mindestens eine Isocyanatkomponente aufweist.

5. Zusammensetzung nach Anspruch 4 **dadurch gekennzeichnet, dass** das molare Verhältnis der Gesamtmenge der stickstoffhaltigen Verbindungen, umfassend die stickstoffhaltigen Verbindungen der Mischung (M) sowie optionale zusätzliche Amin-Katalysatoren, gegenüber der Gesamtmenge der mit Isocyanaten reaktiven Gruppen der Polyolkomponente von 4 × 10⁻⁴ zu 1 bis 0,2 zu 1 beträgt.

6. Zusammensetzungen nach Anspruch 4 oder 5, **dadurch gekennzeichnet, dass** die stickstoffhaltigen Verbindungen, umfassend die stickstoffhaltigen Verbindungen der Mischung (M) sowie optionale zusätzliche Amin-Katalysatoren, in einem Massenanteil von 0,01 bis 20,0 Teilen (pphp), bevorzugt 0,01 bis 5,00 Teilen und besonders bevorzugt 0,02 bis 3,00 Teilen bezogen auf 100 Teile (pphp) Polyolkomponente eingesetzt werden.

7. Polyurethansystem, insbesondere Polyurethanschaum, erhältlich durch eine Verwendung gemäß einem der vorigen Ansprüche 1 bis 3.

8. Polyurethansystem nach Anspruch 7, **dadurch gekennzeichnet, dass** es ein Polyurethanhartschaum, ein Polyurethanweichschaum, ein viskoelastischer Schaum, ein Kaltschaum, ein halbharter Polyurethanschaum, ein thermoverformbarer Polyurethanschaum oder ein Integralschaum ist, erhalten unter Einsatz der Mischung (M) in einer Menge von 0,005 bis 10 Gew.-% bezogen den fertigen Polyurethanschaum.

9. Verwendung von Polyurethansystemen gemäß Anspruch 7 oder 8 als Kühlschrankisolierung, Dämmplatte, Sandwichelement, Rohrisolation, Sprühschaum, 1- & 1,5-Komponenten-Dosenschaum, Holzimitat, Modellschaum, Blumensteckschaum, Verpackungsschaum, Matratze, Möbelpolster, Möbelformschaum, Kopfkissen, "Rebonded Foam", Schwammschaum, Automobil-Sitzpolster, Kopfstütze, Instrumententafel, Automobil-Innenverkleidung, Automobil-Dachhimmel, Schallabsorptionsmaterial, Lenkrad, Schuhsohle, Teppichrückseitenschaum, Filterschaum, Dichtschaum, Dichtmittel und Kleber oder zur Herstellung entsprechender Produkte.

## Claims

1. Use of a mixture (M) comprising nitrogen compound(s) in the production of polyurethanes, especially polyurethane foams, preferably flexible polyurethane foams, **characterized in that** said mixture (M) comprises the following constituents:
(a) N,N-dimethylaminopropylamine in an amount of 400-95% by weight,
(b) water in a total amount of ≥ 10% by weight,
(c) at least one amine selected from the group of 1,1'-{[3-(dimethylamino)propyl]imino}bis-2-propanol, bis(3-dimethylaminopropyl)amine and/or 1-[bis[3-(dimethylamino)propyl]amino]-2-propanol in a total amount of ≥ 5% by weight,
% by weight based in each case on the overall mixture (M) .

2. Use according to Claim 1, **characterized in that** the mixture (M) comprises component (c) in a total amount of 10%-95% by weight, especially 10%-60% by weight, % by weight based in each case on the overall mixture (M).

3. Use according to any of the preceding claims, **characterized in that** the mixture (M) has a flashpoint of > 60°C, measured by the Pensky-Martens method with a closed crucible in accordance with DIN EN ISO 2719:2003-09.

4. Composition comprising at least one polyol component, **characterized in that** the composition comprises at least one mixture (M) according to any of the preceding claims, and where the composition preferably includes at least one isocyanate component.

5. Composition according to Claim 4, **characterized in that** the molar ratio of the total amount of the nitrogen compounds, comprising the nitrogen compounds of mixture (M) and optional additional amine catalysts, relative to the total amount of the isocyanate-reactive groups of the polyol component is from 4 × 10⁻⁴:1 to 0.2:1.

6. Compositions according to Claim 4 or 5, **characterized in that** the nitrogen compounds, comprising the nitrogen compounds of mixture (M) and optional additional amine catalysts, are used in a proportion by mass of 0.01 to 20.0 parts (pphp), preferably 0.01 to 5.00 parts and more preferably 0.02 to 3.00 parts based on 100 parts (pphp) of polyol component.

7. Polyurethane system, especially polyurethane foam, obtainable through a use according to any of the preceding Claims 1 to 3.

8. Polyurethane system according to Claim 7, **characterized in that** it is a rigid polyurethane foam, a flexible polyurethane foam, a viscoelastic foam, a cold-cure foam, a semirigid polyurethane foam, a thermoformable polyurethane foam or an integral foam, obtained using the mixture (M) in an amount of 0.005% to 10% by weight, based on the finished polyurethane foam.

9. Use of polyurethane systems according to Claim 7 or 8 as refrigerator insulation, insulation panel, sandwich element, pipe insulation, spray foam, 1- and 1.5-component can foam, imitation wood, modelling foam, floral foam, packaging foam, mattress, furniture cushioning, furniture moulding foam, pillows, rebonded foam, sponge foam, automotive seat cushioning, headrest, dashboard, automotive interior, automotive roof liner, sound absorption material, steering wheel, shoe sole, carpet backing foam, filter foam, sealant foam, sealant and adhesive or for producing corresponding products.

## Revendications

1. Utilisation d'un mélange (M) contenant un/des composé(s) azoté(s) lors de la préparation de polyuréthanes, en particulier de mousses de polyuréthane, de préférence de mousses souples de polyuréthane, **caractérisée en ce que** le mélange (M) mentionné contient les constituants suivants
(a) N,N-diméthylaminopropylamine, en une quantité de 40%-95% en poids,
(b) eau en une quantité totale ≥ 10% en poids,
(c) au moins une amine choisie dans le groupe constitué par le 1,1'-{[3-(diméthylamino)propyl]imino}bis-2-propanol, la bis(3-diméthylaminopropyl)amine et/ou le 1-[bis[3-(diméthylamino)propyl]amino]-2-propanol en une quantité totale ≥ 5% en poids,
les indications de % en poids étant à chaque fois par rapport à la totalité du mélange (M).

2. Utilisation selon la revendication 1, **caractérisée en ce que** le mélange (M) contient le composant (c) en une quantité totale de 10-95% en poids, en particulier de 10-60% en poids, les indications de % en poids étant à chaque fois par rapport à la totalité du mélange (M).

3. Utilisation selon l'une des revendications précédentes, **caractérisée en ce que** le mélange (M) présente un point éclair > 60°C, mesuré selon la méthode de Pensky-Martens à l'aide d'un creuset fermé selon la norme DIN EN ISO 2719:2003-09.

4. Composition contenant au moins un composant polyol, **caractérisée en ce que** la composition contient au moins un mélange (M) selon l'une des revendications précédentes et la composition présentant de préférence au moins un composant isocyanate.

5. Composition selon la revendication 4, **caractérisée en ce que** le rapport molaire de la quantité totale des composés azotés, comprenant les composés azotés du mélange (M) ainsi que des catalyseurs à base d'amine éventuellement supplémentaires, à la quantité totale des groupes réactifs vis-à-vis des isocyanates du composant polyol est de 4 × 10⁻⁴:1 à 0,2:1.

6. Compositions selon la revendication 4 ou 5, **caractérisées en ce que** les composés azotés, comprenant les composés azotés du mélange (M) ainsi que des catalyseurs à base d'amine éventuellement supplémentaires, sont utilisés en une proportion massique de 0,01 à 20,0 parties (pphp), de préférence de 0,01 à 5,00 parties et de manière particulièrement préférée de 0,02 à 3,00 parties, par rapport à 100 parties (pphp) de composant polyol.

7. Système de polyuréthane, en particulier mousse de polyuréthane, pouvant être obtenu(e) par une utilisation selon l'une des revendications précédentes 1 à 3.

8. Système de polyuréthane selon la revendication 7, **caractérisé en ce qu'**il s'agit d'une mousse dure de polyuréthane, d'une mousse souple de polyuréthane, d'une mousse viscoélastique, d'une mousse froide, d'une mousse de polyuréthane semi-dure, d'une mousse de polyuréthane thermodéformable ou d'une mousse intégrale, obtenue à l'aide du mélange (M) en une quantité de 0,005 à 10% en poids par rapport à la mousse de polyuréthane finie.

9. Utilisation de systèmes de polyuréthane selon la revendication 7 ou 8 comme isolation de réfrigérateur, plaque d'isolation, élément sandwich, isolation de tuyaux, mousse à pulvériser, mousse dosée à 1 et 1,5 composant, imitation du bois, mousse pour modélisation, mousse pour montages floraux, mousse d'emballage, matelas, rembourrage de meubles, mousse façonnée pour meubles, oreiller, mousse agglomérée (« Rebonded Foam »), mousse éponge, rembourrage de siège de voiture, appuie-tête, tableau de bord, revêtement interne de voiture, ciel de voiture, matériau d'absorption du bruit, volant, semelle de chaussure, mousse pour face arrière de tapis, mousse de filtre, mousse d'étanchéité, agent d'étanchéité et adhésif ou pour la fabrication de produits correspondants.
